# EUROPEAN PATENT APPLICATION

(11) **EP 4 561 181 A1**
(43) Date of publication of application: **28.05.2025**
(21) Application number: 23842983.1
(22) Date of filing: 18.07.2023
(51) Int. Cl.: H04W 48/02, H04W 8/22, H04W 12/40, H04W 88/06

(54) **COMMUNICATION DEVICE AND COMMUNICATION METHOD**

(30) Priority: 20.07.2022 JP 2022115829
(71) Applicant: DENSO CORPORATION, Kariya-city, Aichi 448-8661 (JP)
(72) Inventor: YAMAMOTO, Tomoyuki, Kariya-city, Aichi 448-8661 (JP)
(74) Representative: TBK
(86) International application number: PCT/JP2023/026322
(87) International publication number: WO 2024/019060

(57) **Abstract**

A communication apparatus (100) is a communication apparatus capable of communicating with a plurality of networks (200A and 200B) by using a plurality of subscriber identity modules. A communication apparatus includes a communicator (120) configured to transmit, to a first network (200A), information for the temporary capability restriction of the for the temporary capability restriction of the communication apparatus for temporarily restricting a communication capability of the communication apparatus used for communication with the first network, and a controller (130) configured to determine whether to execute the restriction of the communication capability after the information for the temporary capability restriction of the for the temporary capability restriction of the communication apparatus is transmitted. In a case where it is determined to execute the restriction of the communication capability, the controller is configured to perform control to start connection with a second network (200B) by executing the restriction of the communication capability.

## Description

### Cross-Reference to Related Application

This application is based on and claims the benefit of priority from Japanese Patent Application No. 2022-115829, filed on July 20, 2022, the entire contents of which are incorporated herein by reference.

### Technical Field

The present disclosure relates to a communication apparatus and a communication method used in a mobile communication system.

In Release 18 of 3rd Generation Partnership Project (3GPP, registered trademark. The same applies hereinafter), which is a standardization project of a mobile communication system, a work item for designing a feature of a communication apparatus including two transceivers to perform communication with a plurality of networks by using a plurality of subscriber identity modules has been launched.

In a case where such a communication apparatus uses two transceivers for communication with a certain network (hereinafter, a first network), when one transceiver is independently switched for communication with another network (hereinafter, a second network), the first network communicates with the communication apparatus without knowing the switching of the one transceiver, and a data loss may occur between the communication apparatus and the first network.

Therefore, in the Release 18 of the 3GPP, it has been studied to temporarily restrict a communication capability of the communication apparatus used for communication with the first network such that the one transceiver can be used for communication with the second network (see Non Patent Literature 1).

### Citation List

### Non Patent Literature

Non Patent Literature 1: 3GPP Contribution: "RP-220955"

### Summary of Invention

A communication apparatus according to a first aspect is a communication apparatus capable of communicating with a plurality of networks by using a plurality of subscriber identity modules. The communication apparatus comprises a communicator configured to transmit, to a first network, information for the temporary capability restriction of the for the temporary capability restriction of the communication apparatus for temporarily restricting a communication capability of the communication apparatus used for communication with the first network, and a controller configured to determine whether or not to execute the restriction of the communication capability after the information for the temporary capability restriction of the for the temporary capability restriction of the communication apparatus is transmitted. The controller is configured to perform control to start connection with a second network by executing the restriction of the communication capability in a case where it is determined to execute the restriction of the communication capability.

A communication method according to a second aspect is a communication method executed in a communication apparatus capable of communicating with a plurality of networks by using a plurality of subscriber identity modules. The communication method comprises the steps of transmitting, to a first network, information for the temporary capability restriction of the for the temporary capability restriction of the communication apparatus for temporarily restricting a communication capability of the communication apparatus used for communication with the first network, determining whether or not to execute the restriction of the communication capability after the information for the temporary capability restriction of the for the temporary capability restriction of the communication apparatus is transmitted, and performing control to start connection with a second network by executing the restriction of the communication capability in a case where it is determined to execute the restriction of the communication capability.

### Brief Description of Drawings

Objects, features, advantages, and the like of the present disclosure will become more apparent from the following detailed description with reference to the accompanying drawings.
Fig. 1 is a diagram illustrating a configuration example of a mobile communication system according to an embodiment.
Fig. 2 is a diagram illustrating a configuration example of a protocol stack of the mobile communication system according to the embodiment.
Fig. 3 is a diagram for describing an assumed scenario.
Fig. 4 is a diagram illustrating a configuration example of user equipment (UE) according to the embodiment.
Fig. 5 is a diagram illustrating a configuration example of a base station of a first network according to the embodiment.
Fig. 6 is a sequence diagram for describing a first operation example according to the embodiment.
Fig. 7 is a diagram (part 1) for describing an information element in a first operation example according to the embodiment.
Fig. 8 is a diagram (part 2) for describing the information element in the first operation example according to the embodiment.
Fig. 9 is a sequence diagram for describing a second operation example according to the embodiment.
Fig. 10 is a diagram for describing an information element in the second operation example according to the embodiment.
Fig. 11 is a flowchart for describing the second operation example according to the embodiment.
Fig. 12 is a flowchart for describing Modification 1 of the second operation example according to the embodiment.
Fig. 13 is a flowchart for describing Modification 1 of the second operation example according to the embodiment.
Fig. 14 is a sequence diagram for describing a third operation example according to the embodiment.
Fig. 15 is a diagram for describing an information element in the third operation example according to the embodiment.

### Description of Embodiments

A mobile communication system according to an embodiment will be described with reference to the drawings. In the description of the drawings, the same or similar parts are denoted by the same or similar reference numerals.

At present, in the existing 3GPP technical specification, in a case where the communication apparatus that performs communication with the first network desires communication with a second network, there is no specific mechanism for temporarily restricting communication capability of a communication apparatus used for communication with a first network. Thus, there is a concern that the communication apparatus cannot appropriately restrict the communication capability.

Therefore, an object of the present disclosure is to provide a communication apparatus and a communication method that enable a communication apparatus capable of communicating with a plurality of networks by using a plurality of subscriber identity modules to appropriately restrict a communication capability.

### [Embodiment]

### (System Configuration)

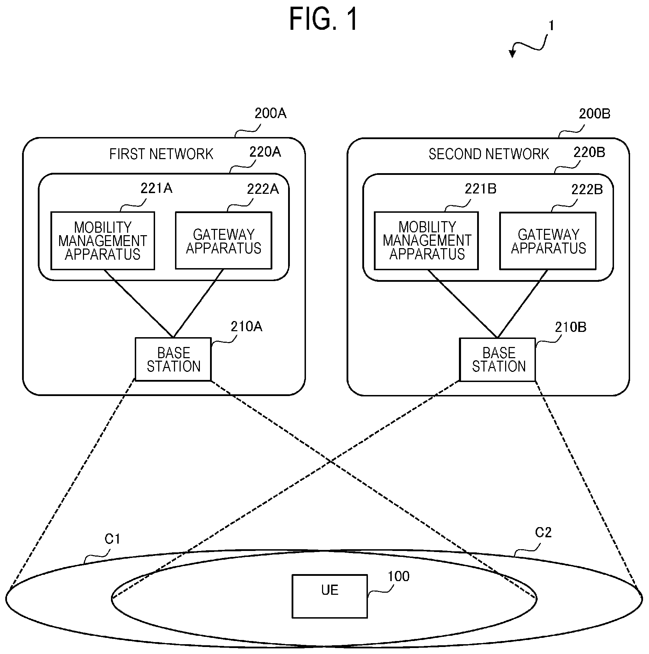

A configuration of a mobile communication system 1 according to an embodiment will be described with reference to Fig. 1. Hereinafter, an example in which the mobile communication system 1 is a fifth generation system (5G/NR: New Radio) in the 3GPP standard will be mainly described, but a fourth generation system (4G/LTE: Long Term Evolution) system and/or a sixth generation system may be at least partially applied to the mobile communication system 1.

As illustrated in Fig. 1, the mobile communication system 1 according to the embodiment includes a user equipment (UE) 100, a first network 200A, and a second network 200B.

The UE 100 is an example of a communication apparatus. The UE 100 may be a mobile radio communication apparatus. The UE 100 may be an apparatus used by a user. For example, the UE 100 is a mobile phone terminal (including a smartphone), a tablet terminal, a laptop PC, a communication module (including a communication card or a chipset), a sensor or equipment provided in the sensor, a vehicle or equipment provided in the vehicle (for example, a vehicle UE), or an aerial vehicle or equipment provided in the aerial vehicle (for example, an aerial UE). Note that the UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The UE 100 can communicate with a plurality of networks by using a plurality of subscriber identity modules (SIM). The UE 100 may be a multi-SIM device compatible with a plurality of SIMs. Hereinafter, an example in which the UE 100 is compatible with two SIMs will be mainly described; however, the UE 100 may be compatible with three or more SIMs. A case where "the UE is compatible with a plurality of SIMs" means that the UE 100 has an ability to handle a plurality of SIMs, and the UE 100 may not be necessarily equipped with the plurality of SIMs. Such a UE 100 may be referred to as a "UE supporting a plurality of SIMs". Note that the SIM is not restricted to a card type SIM (so-called a SIM card), and may be an embedded SIM (so-called an eSIM) that is integrated in the UE 100 in advance. The SIM may be referred to as a universal subscriber identity module (USIM).

The first network 200A is a network associated with one SIM of the UE 100. The second network 200B is a network associated with the other SIM of the UE 100. It is assumed that the UE 100 has performed location registration in the first network 200A by using one SIM and has performed location registration in the second network 200B by using the other SIM. That is, the UE 100 exists in each of the first network 200A and the second network 200B. The first network 200A and the second network 200B may be networks of different communication operators. However, the first network 200A and the second network 200B may be networks of the same communication operator. Different public land mobile network (PLMN) IDs may be allocated to the first network 200A and the second network 200B.

The first network 200A includes a base station 210A constituting a radio access network and a core network 220A. The core network 220A includes, as core network apparatuses, a mobility management apparatus 221A and a gateway apparatus 222A. Similarly, the second network 200B includes a base station 210B constituting a radio access network and a core network 220B. The core network 220B includes, as core network apparatuses, a mobility management apparatus 221B and a gateway apparatus 222B. Hereinafter, the base stations 210A and 200B will be simply referred to as a base station 210 in a case where these base stations are not distinguished, the mobility management apparatuses 221A and 221B will be simply referred to as a mobility management apparatus 221 in a case where the mobility management apparatuses are not distinguished, and the gateway apparatuses 222A and 222B will be simply referred to as a gateway apparatus 222 in a case where the gateway apparatuses are not distinguished.

The base station 210 is a radio communication apparatus that performs radio communication with the UE 100. The base station 210 manages one or a plurality of cells. The base station 210 performs radio communication with the UE 100 that has established connection with a cell in a radio resource control (RRC) layer. The base station 210 has a radio resource management (RRM) feature, a routing feature of user data (hereinafter, simply referred to as "data"), a measurement control feature for mobility control and scheduling, and the like. The "cell" is used as a term indicating a minimum unit of a radio communication area. The "cell" is also used as a term indicating a feature or a resource that performs radio communication with the UE 100. One cell belongs to one carrier frequency. Fig. 1 illustrates an example in which the base station 210A manages a cell C1 and the base station 210B manages a cell C2. The UE 100 is located in an overlapping region of the cell C1 and the cell C2.

The base station 210 may be a gNB, which is a base station in 5G/NR, or an eNB, which is a base station in 4G/LTE. Hereinafter, an example in which the base station 210 is the gNB will be mainly described. The feature of the base station 210 may be divided into a central unit (CU) and a distributed unit (DU). The base station 210 may be a relay node such as an Integrated access and backhaul (IAB) node.

The mobility management apparatus 221 is an apparatus supporting a control plane, and is an apparatus that performs various kinds of mobility management for the UE 100. The mobility management apparatus 221 communicates with the UE 100 by using non-access stratum (NAS) signaling and manages information on a tracking area in which the UE 100 exists. The mobility management apparatus 221 performs paging through the base station 210 to notify the UE 100 of an incoming call. The mobility management apparatus 221 may be an access and mobility management function (AMF) in 5G/NR or a mobility management entity (MME) in 4G/LTE.

The gateway apparatus 222 is an apparatus supporting a user plane and performs transfer control of data of the UE 100. The gateway apparatus 222 may be a user plane function (UPF) in 5G/NR or a serving gateway (S-GW) in 4G/LTE.

### (Configuration Example of Protocol Stack)

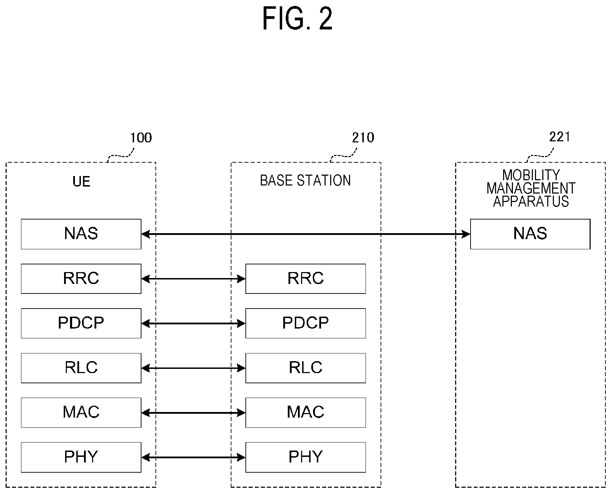

A configuration example of a protocol stack of the mobile communication system 1 will be described with reference to Fig. 2. As illustrated in Fig. 2, a protocol of a radio section between the UE 100 and the base station 210 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted via a physical channel between the PHY layer of the UE 100 and the PHY layer of the base station 210.

The MAC layer performs data priority control, retransmission processing by hybrid ARQ (HARQ), a random access procedure, and the like. Data and control information are transmitted via a transport channel between the MAC layer of the UE 100 and the MAC layer of the base station 210. The MAC layer of the base station 210 includes a scheduler. The scheduler determines uplink and downlink transport formats (transport block size and modulation and coding scheme (MCS)) and resources to be allocated to the UE 100.

The RLC layer transmits data to the RLC layer on a reception side by using the features of the MAC layer and the PHY layer. Data and control information are transmitted via a logical channel between the RLC layer of the UE 100 and the RLC layer of the base station 210.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control, and a radio bearer that is a unit in which an access stratum (AS) performs QoS control.

The RRC layer controls a logical channel, a transport channel, and a physical channel according to establishment, reestablishment, and release of the radio bearer. RRC signaling for various configurations is transmitted between the RRC layer of the UE 100 and the RRC layer of the base station 210. In a case where there is RRC connection between the RRC of the UE 100 and the RRC of the base station 210, the UE 100 is in an RRC connected state. In a case where there is no RRC connection between the RRC of the UE 100 and the RRC of the base station 210, the UE 100 is in an RRC idle state. In a case where the RRC connection between the RRC of the UE 100 and the RRC of the base station 210 is suspended, the UE 100 is in an RRC inactive state.

An NAS layer located above the RRC layer performs session management and mobility management of the UE 100. NAS signaling is transmitted between the NAS layer of the UE 100 and an NAS layer of the mobility management apparatus 221.

A mode (NAS state) in the NAS layer of the UE 100 includes an idle mode and a connected mode. In the connected mode, context information of the UE 100 is stored in the network, and in the idle mode, context information of the UE 100 is not stored in the network. In a case where the UE 100 is in the connected mode, the UE 100 is in the RRC connected state or the RRC inactive state. In a case where the UE 100 is in the idle mode, the UE 100 is in the RRC idle state.

The mode in the NAS layer may be a 5G mobility management (5GMM) mode. In this mode, the connected mode may be a 5GMM-connected mode, and the idle mode may be a 5GMM-idle mode.

Note that the UE 100 has an application layer and the like in addition to a radio interface protocol.

### (Assumed Scenario)

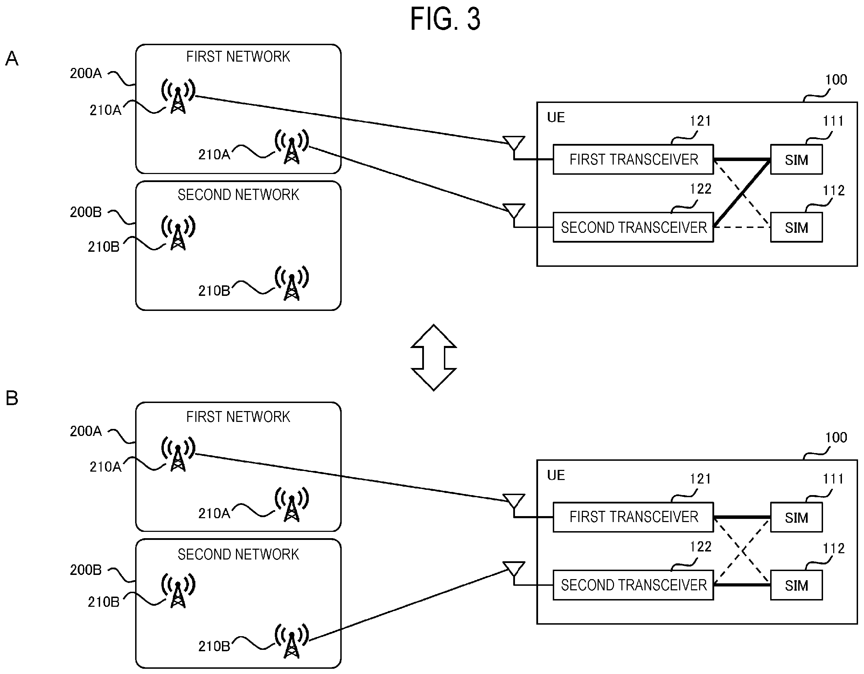

An assumed scenario in the mobile communication system 1 according to the embodiment will be described with reference to Fig. 3. In the Release 18 of the 3GPP, which is the standardization project of the mobile communication system 1, a work item for designing a feature of the UE 100 having two transceivers to perform communication with a plurality of networks by using a plurality of SIMs has been launched.

For example, as illustrated in Fig. 3A, in a case where the UE 100 performs communication with the first network 200A by using a SIM 111, the UE 100 can use a first transceiver 121 and a second transceiver 122 for communication with the first network 200A. As illustrated in Fig. 3B, in a case where the UE 100 performs communication with the second network 200B by using a SIM 112, it is assumed that the second transceiver 122 is switched for communication with the second network 200B. As a result, the UE 100 can perform communication with the second network 200B by the second transceiver 122 while communication with the first network 200A is maintained by the first transceiver 121.

Here, in a case where the UE 100 uses two transceivers for communication with the first network 200A, when one transceiver (for example, the second transceiver 122) is independently switched for communication with the second network 200B, the first network 200A performs communication with the UE 100 without knowing the switching of the second transceiver 122, and thus, a data loss may occur between the UE 100 and the first network 200A.

Therefore, in Release 18 of 3GPP, it has been studied to temporarily restrict a communication capability of the UE 100 used for communication with the first network 200A such that one transceiver can be used for communication with the second network 200B.

However, currently, in the existing 3GPP technical specification, in a case where the UE 100 that performs communication with the first network 200A desires communication with the second network 200B, since there is no specific mechanism for temporarily restricting the communication capability of the UE 100 used for communication with the first network 200A, and there is a concern that a problem may occur.

For example, there is a concern that the first network 200A cannot recognize that the UE 100 desires the temporary restriction of the communication capability and the UE 100 and the first network 200A cannot be properly synchronized with each other regarding the temporary restriction of the communication capability. In an embodiment to be described later, an operation for enabling a network communicating with the UE 100 capable of communicating with a plurality of networks by using a plurality of SIMs to be recognizable regarding the temporary restriction of the communication capability of the UE 100 will be described.

In addition, since there is no specific mechanism for temporarily restricting the communication capability of the UE 100 used for communication with the first network 200A, there is a concern that the UE 100 cannot appropriately restrict the communication capability. In an embodiment to be described later, an operation for enabling the UE 100 capable of communicating with a plurality of networks using a plurality of SIMs to appropriately restrict the communication capability will be described.

In addition, currently, in the existing 3GPP technical specification, there is no specific mechanism for the UE 100 that temporarily restricts the communication capability used for communication with the first network 200A to release or change the restriction of the communication capability after communication with the second network 200B is ended, for example. Thus, the first network 200A cannot recognize that the UE 100 desires to release or change the temporary restriction of the communication capability, and there is a concern that the UE 100 and the first network 200A cannot be properly synchronized with each other regarding the temporary restriction of the communication capability. In an embodiment to be described later, an operation for enabling a network communicating with the UE 100 capable of communicating with a plurality of networks by using a plurality of SIMs to be recognizable regarding the temporary restriction of the communication capability of the UE 100 will be described.

### (Configuration Example of UE)

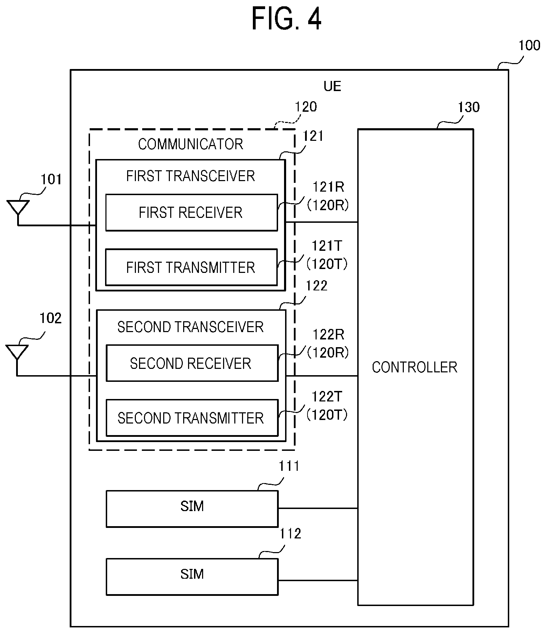

A configuration example of the UE 100 will be described with reference to Fig. 4. As illustrated in Fig. 4, the UE 100 includes an antenna 101, an antenna 102, the SIM 111, the SIM 112, a communicator 120, and a controller 130. The antenna 101 and the antenna 102 may be provided outside the UE 100. The SIM 111 and the SIM 112 are SIM cards or eSIMs.

The SIM 111 stores subscriber information and configuration information necessary for the UE 100 to communicate with the first network 200A. The SIM 111 stores identification information of the UE 100 in the first network 200A, for example, a telephone number, an international mobile subscriber identity (IMSI), and the like. The SIM 111 corresponds to a first subscriber information module. The UE 100 communicates with the first network 200A by using the SIM 111.

The SIM 112 stores subscriber information and configuration information necessary for the UE 100 to communicate with the second network 200B. The SIM 112 stores identification information of the UE 100 in the second network 200B, for example, a telephone number, an IMSI, and the like. The SIM 112 corresponds to a second subscriber information module. The UE 100 communicates with the second network 200B by using the SIM 112.

The communicator 120 performs radio communication with the first network 200A and radio communication with the second network 200B via the antenna 101 under the antenna 102 under the controller 130. The communicator 120 includes a plurality of transceivers. The transceiver may be referred to as a transceiver or a radio frequency (RF) chain. In the present embodiment, the communicator 120 includes the first transceiver 121 and the second transceiver 122. The first transceiver 121 and the second transceiver 122 include a receiver 120R and a transmitter 120T. The receiver 120R converts a radio signal received by each antenna into a received signal that is a baseband signal, performs signal processing on the received signal, and outputs the processed signal to the controller 130. The transmitter 120T performs signal processing on a transmitted signal that is a baseband signal output from the controller 130, converts the processed transmitted signal into a radio signal, and transmits a radio signal from each antenna. The receiver 120R may be referred to as a receiver, an Rx chain, or an Rx branch. The transmitter 120T may be referred to as a transmitter, a Tx chain, or a Tx branch. In the present embodiment, the first transceiver 121 includes a first receiver 121R as the receiver 120R, and includes a first transmitter 121T as the transmitter 120T. The second transceiver 122 includes a second receiver 122R as the receiver 120R and a second transmitter 122T as the transmitter 120T.

The controller 130 controls the communicator 120 and performs various kinds of control in the UE 100. The controller 130 controls communication with the first network 200A by using the SIM 111 and controls communication with the second network 200B by using the SIM 112. The controller 130 includes at least one processor and at least one memory. The memory stores a program executed by the processor and information used for processing by the processor. The memory may include at least one of a read only memory (ROM), an erasable programmable read only memory (EPROM), an electrically erasable programmable read only memory (EEPROM), a random access memory (RAM), and a flash memory. The processor may include a digital signal processor (DSP) that performs digital processing on a digital signal and a central processing unit (CPU) that executes a program. Note that a part of the memory may be provided in the communicator 120. In addition, the DSP may be provided in the communicator 120.

The controller 130 includes an RRC processor 131 and an NAS processor 132. The RRC processor 131 executes processing in the RRC layer. The NAS processor 132 executes processing in the NAS layer, which is an upper layer than the RRC layer. Note that the RRC processor 131 and the NAS processor 132 may be constituted by one processor or may be constituted by a plurality of processors.

The UE 100 having the above configuration can communicate with a plurality of networks by using a plurality of SIMs. The communicator 120 transmits, to the first network 200A, information for the temporary capability restriction of the UE 100 for temporarily restricting the communication capability of the UE 100 used for communication with the first network 200A in order to perform communication with the second network 200B. As a result, the first network 200A can recognize the temporary restriction of the communication capability of the UE 100 based on the information for the temporary capability restriction of the UE 100. Accordingly, the UE 100 and the first network 200A can be easily properly synchronized with each other regarding the temporary restriction of the communication capability. Here, in the present embodiment, the restriction may include reducing. That is, a case where the communication capability is restricted may correspond to a case where the communication capability is reduced. That is, in the present embodiment, the restriction may be replaced with reduction.

In addition, the communicator 120 transmits the information for the temporary capability restriction of the UE 100 to the first network 200A. After the information for the temporary capability restriction of the UE 100 is transmitted, the controller 130 determines whether or not to execute the restriction of the communication capability. In a case where it is determined to execute the restriction of the communication capability, the controller 130 performs control to start connection with the second network 200B by execute the restriction of the communication capability. Since the UE 100 determines whether or not to execute the restriction of the communication capability after the information for the temporary capability restriction of the UE 100 is transmitted, the communication capability of the UE 100 can be appropriately restricted.

In addition, the controller 130 temporarily restricts the communication capability of the UE 100 used for communication with the first network 200A in order to perform communication with the second network 200B. The communicator 120 transmits, to the first network 200A, information for releasing or changing the temporary restriction of the communication capability for communication with the second network 200B. As a result, the first network 200A can recognize the temporary restriction of the communication capability of the UE 100 based on the information. Accordingly, the UE 100 and the first network 200A can be easily properly synchronized with each other regarding the temporary restriction of the communication capability.

Note that an operation of a functional unit (specifically, at least one of the antenna 101, the antenna 102, the SIM 111, the SIM 112, the communicator 120, and the controller 130 (the RRC processor 131 and the NAS processor 132)) included in the UE 100 may be described as an operation of the UE 100.

### (Configuration Example of Base Station)

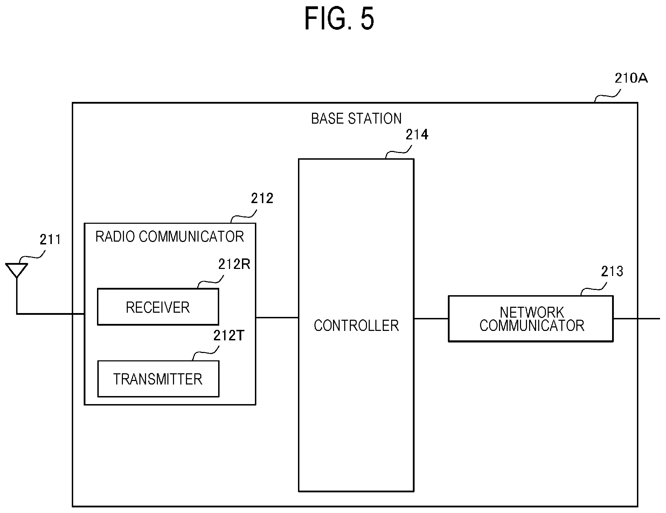

A configuration example of the base station 210A of the first network 200A will be described with reference to Fig. 5. Note that since the base station 210B of the second network 200B also has the same configuration as the base station 210A, the description thereof will be omitted. As illustrated in Fig. 5, the base station 210A includes an antenna 211, a radio communicator 212, a network communicator 213, and a controller 214.

The radio communicator 212 performs communication with the UE 100 via the antenna 211 under the control of the controller 214. The radio communicator 212 includes a receiver 212R and a transmitter 212T. The receiver 212R converts a radio signal received by the antenna 211 into a received signal that is a baseband signal, performs signal processing on the received signal, and outputs the processed signal to the controller 214. The transmitter 212T performs signal processing on a transmitted signal that is a baseband signal output from the controller 214, converts the processed transmitted signal into a radio signal, and transmits the radio signal from the antenna 211.

The network communicator 213 is connected to the core network 220A. The network communicator 213 performs network communication with the mobility management apparatus 221A and the gateway apparatus 222A under the control of the controller 214.

The controller 214 controls the radio communicator 212 and performs various kinds of control in the base station 210A. The controller 214 includes at least one processor and at least one memory. The memory stores a program executed by the processor and information used for processing by the processor. The memory may include at least one of a ROM, an EPROM, an EEPROM, a RAM, and a flash memory. The processor may include a digital signal processor (DSP) that performs digital processing on a digital signal and a central processing unit (CPU) that executes a program. Note that a part of the memory may be provided in the radio communicator 212. In addition, the DSP may be provided in the radio communicator 212.

In the base station 210 having the above configuration, the radio communicator 212 receives, from the UE 100, the information for the temporary capability restriction of the UE 100 for temporarily restricting the communication capability of the UE 100 used for communication with the first network 200A in order to perform communication with the second network 200B. As a result, the first network 200A can recognize the temporary restriction of the communication capability of the UE 100 based on the information for the temporary capability restriction of the UE 100. Accordingly, the UE 100 and the first network 200A can be easily properly synchronized with each other regarding the temporary restriction of the communication capability.

In addition, the radio communicator 212 receives, from the UE 100, the information for releasing or changing the temporary restriction of the communication capability of the UE 100 for communication with the second network 200B. As a result, the first network 200A can recognize the temporary restriction of the communication capability of the UE 100 based on restriction removal information or restriction change information. Accordingly, the UE 100 and the first network 200A can be easily properly synchronized with each other regarding the temporary restriction of the communication capability.

Note that an operation of a functional unit (specifically, at least one of the antenna 211, the radio communicator 212, the network communicator 213, and the controller 214) included in the base station 210A may be described as an operation of the base station 210A.

### (Operation of Mobile Communication System)

### (1) First Operation Example

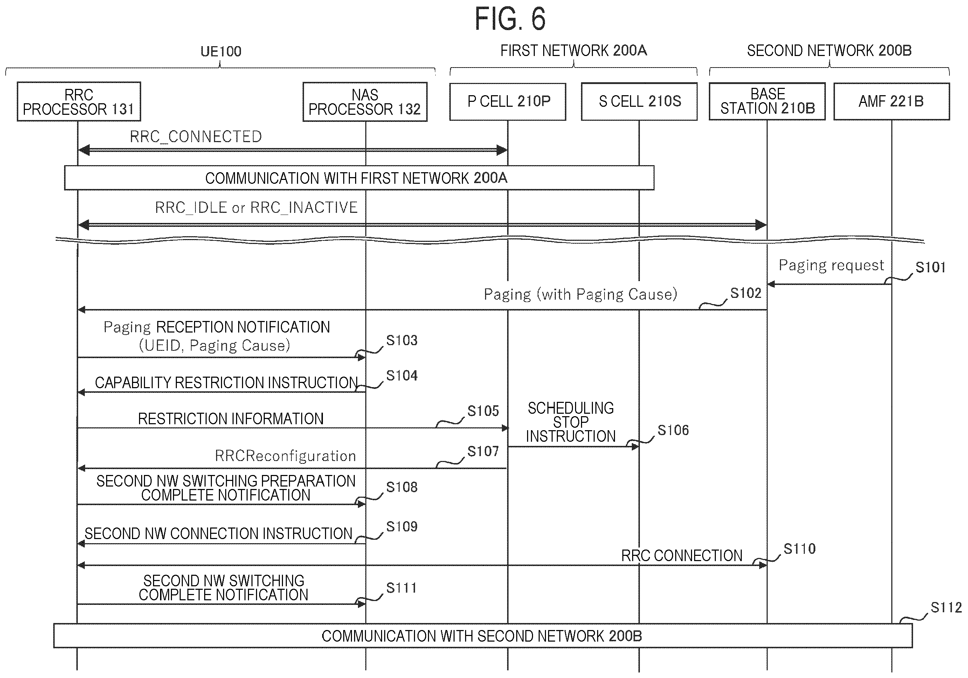

A first operation example of the mobile communication system 1 will be described with reference to Figs. 6 to 8. In the present operation example, the UE 100 transmits the information for the temporary capability restriction of the UE 100 to the first network 200A. In the present operation example, the UE 100 exists in a primary cell (P cell) 210P and a secondary cell (S cell) 210S of the first network 200A. One base station 210A of the first network 200A may manage the P cell 210P and the S cell 210S. Alternatively, a certain base station 210A of the first network 200A may manage the P cell 210P, and another base station 210A of the first network 200A may manage the S cell 210S. Note that the P cell 210P may be a P cell in a carrier aggregation operation. In addition, the S cell 210S may be an S cell in the carrier aggregation operation. In addition, the P cell 210P may be a P cell belonging to a master cell group (MCG) in a dual connectivity operation. In addition, the S cell 210S may be a primary secondary cell (PS cell) belonging to a secondary cell group (SCG) in the dual connectivity operation. In addition, the S cell 210S may be a secondary cell (S cell) belonging to the master cell group (MCG) and/or the secondary cell group (SCG) in the dual connectivity operation.

Here, the P cell of the master cell group (MCG) and/or the primary secondary cell (PS cell) belonging to the secondary cell group (SCG) in the dual connectivity operation are also referred to as special cells (SP cells). In addition, in the dual connectivity operation, an MAC entity may be associated with each of the master cell group (MCG) and the secondary cell group (SCG).

Hereinafter, for ease of description, in the present embodiment, the P cell belonging to the master cell group (MCG) is also referred to as a P cell. In addition, the primary secondary cell (PS cell) belonging to the secondary cell group (SCG) is also referred to as a secondary cell. That is, in the present embodiment, the P cell may be replaced with the P cell belonging to the master cell group (MCG). In addition, in the present embodiment, the secondary cell may be replaced with the primary secondary cell (PS cell) and/or the secondary cell (S cell) belonging to the secondary cell group (SCG).

As illustrated in Fig. 6, the UE 100 is in the RRC connected state in the first network 200A. In the UE 100 in the RRC connected state, the RRC connection is established between the first network 200A and the UE 100. Accordingly, the controller 130 of the UE 100 and the controller 214 of the base station 210 perform control to establish the RRC connection between the UE 100 and the base station 210.

In addition, the UE 100 performs communication with the first network 200A. The UE 100 is in communication with the first network 200A. For example, a service such as a voice call is provided to the UE 100 from the first network 200A. Note that "in communication" means that the UE 100 is at least in the RRC connected state in the network. Accordingly, in a case where the UE is in communication with the first network 200A, the UE 100 consecutively performs continuous or discontinuous exchange of data with the network.

As illustrated in Fig. 6, the UE 100 is in the RRC idle state or the RRC inactive state in the second network 200B. The UE 100 monitors paging from the second network 200B or receives system block information from the second network 200B while maintaining the RRC connected state in the first network 200A. For example, the UE 100 can monitor paging or receive system block information in the second network 200B during a communication interruption duration with the first network 200A.

Hereinafter, communication between the UE 100 and the base station 210A may be communication between the UE 100 and a cell (specifically, the P cell 210P or the S cell 210S) of the base station 210A, that is, the cell in which the UE 100 exists for the UE 100. The same applies to communication between the UE 100 and the base station 210B. In addition, communication between the UE 100 and a node (for example, the base station 210A (that is, the P cell 210P or the S cell 210S), the mobility management apparatus 221A, or the gateway apparatus 222A) belonging to the first network 200A may be referred to as communication between the UE 100 and the first network 200A. The same applies to the UE 100 and a node belonging to the second network 200B.

In addition, hereinafter, the UE 100 performs communication (specifically, transmission and reception/notification of messages, and the like) with the first network 200A via the communicator 120 (the receiver 120R and/or the transmitter 120T), but for the sake of convenience in description, the description of the communication via the communicator 120 will be appropriately omitted. Similarly, the description that communication between the UE 100 and the second network 200B is also the communication via the communicator 120 will be appropriately omitted. Accordingly, the transmission and/or reception of the messages and the like of the UE 100 may be transmission and/or reception of messages and the like of the communicator 120 (the receiver 120R and/or the transmitter 120T) of the UE 100.

### Step S101:

In the second network 200B, the AMF 221B transmits a paging request (Paging request) for requesting transmission of paging addressed to the UE 100 to the base station 210B. The network communicator 213 of the base station 210B receives the paging request.

The paging request may include paging cause information (Paging Cause) indicating a cause of paging. The paging cause information may indicate, for example, whether or not the cause of paging is a voice call.

### Step S102:

The radio communicator 212 of the base station 210B transmits a paging message (Paging) addressed to the UE 100 in response to the reception of the paging request. The RRC processor 131 (receiver 120R) of the UE 100 receives the paging message from the base station 210B. The RRC processor 131 receives the paging message from the base station 210B when the second network 200B is in the RRC idle state or the RRC inactive state during communication with the first network 200A. The UE 100 may receive the paging message via the first transceiver 121 or may receive the paging message via the second transceiver 122.

The paging message is used for notification to one or more UEs 100. The paging message is a message in the RRC layer. The paging message includes, for example, an ID of the UE 100. More specifically, for example, the paging message includes a list of paging records, and one paging record in the list includes the ID of the UE 100. For example, the ID is the 5G-S-TMSI or the full I-RNTI (Inactive Radio Network Temporary Identifier) of the UE 100. The paging message may include paging cause information (Paging Cause). The paging cause information may designate, for example, that the cause of paging is a voice service. The paging cause information may be associated with an ID of the UE 100, for example.

In a case where the paging message includes the ID of the UE 100 and the UE 100 is in the RRC inactive state or the RRC idle state in the second network 200B during communication with the first network 200A, the RRC processor 131 can execute processing of step S103.

In a case where the paging message includes the ID of the UE 100 and the UE 100 is not in communication with the first network 200A, for example, in a case where the UE 100 is in the RRC idle state or the RRC inactive state with respect to the first network 200A, the RRC processor 131 may execute specified processing when the paging message is received without performing the processing of step S103.

### Step S103:

The RRC processor 131 provides a paging reception notification to the NAS processor 132. The NAS processor 132 receives a paging reception notification from the RRC processor 131. The paging reception notification is for notifying that the UE 100 receives paging. The RRC processor 131 may indicate to the NAS processor 132 that the paging message is received in the second network 200B based on the paging reception notification.

The paging reception notification may include paging cause information (Paging Cause). Note that, for example, in a case where the UE 100 is in the RRC inactive state or idle state, the paging reception notification may include an identifier (UE ID) of the UE 100.

In response to the reception of the paging message, the controller 130 may determine whether or not to temporarily restrict the communication capability of the UE 100 used for communication with the first network 200A. For example, the controller 130 may determine whether or not to temporarily restrict the communication capability based on the paging cause information. For example, in a case where the paging cause information indicates the voice service, the controller 130 may determine to temporarily restrict the communication capability. In a case where the paging cause information indicates is a service other than the voice service, the controller 130 may determine not to temporarily restrict the communication capability.

In addition, the controller 130 may determine whether or not to temporarily restrict the communication capability based on, for example, an input from the user. For example, in a case where the input from the user is to prefer communication with the second network 200B, the controller 130 may determine whether or not to temporarily restrict the communication capability. In a case where the input from the user is not to prefer communication with the second network 200B or in a case where the input from the user for preferring communication with the second network 200B does not occur during a designated duration after the paging is received, the controller 130 may determine not to temporarily restrict the communication capability.

Note that the determination may be performed in the NAS processor 132, or the determination may be performed in an upper layer than the NAS processor 132. In a case where the determination is performed in the upper layer, a determination result may be provided to the NAS processor 132.

In a case where it is determined to temporarily restrict the communication capability of the UE 100 used for communication with the first network 200A, the NAS processor 132 executes processing of step S104. On the other hand, when it is determined not to temporarily restrict the communication capability of the UE 100 used for communication with the first network 200A, the controller 130 may perform the following determination without executing the processing of step S104.

In a case where the communication capability is not temporarily restricted, for example, the controller 130 may determine whether or not to give a priority to communication with the first network 200A over communication with the second network 200B based on the paging cause information. In a case where the priority is given to communication with the first network 200A, the controller 130 may perform control to transmit, to the second network 200B, a notification indicating that the UE does not respond to paging from the second network 200B. On the other hand, when the priority is given to communication with the second network 200B, the controller 130 may perform control to transition from the RRC connected state to the RRC idle state or the RRC inactive state in the first network 200A and transition to the RRC connected state in the second network 200B. The controller 130 may establish RRC connection with the second network 200B and may perform communication with the second network 200B.

### Step S104:

The NAS processor 132 provides a capability restriction instruction to the RRC processor 131. The RRC processor 131 receives the capability restriction instruction from the NAS processor 132. A capability restriction instruction may be an instruction about the transmission of the information for the temporary capability restriction of the UE 100 to be described later. The capability restriction instruction may indicate the content of the information for the temporary capability restriction of the UE 100.

### Step S105:

The RRC processor 131 performs control to transmit the information for the temporary capability restriction of the UE 100 to the first network 200A in order to perform communication with the second network 200B. The communicator 120 transmits the information for the temporary capability restriction of the UE 100 to the first network 200A in order to perform communication with the second network 200B. Specifically, the communicator 120 transmits the information for the temporary capability restriction of the UE 100 to the P cell 210P. The communicator 120 may transmit a message including the information for the temporary capability restriction of the UE 100 to the P cell 210P. The radio communicator 212 of the base station 210A receives the information for the temporary capability restriction of the UE 100 from the UE 100 in the P cell 210P.

The information for the temporary capability restriction of the UE 100 is used to temporarily restrict the communication capability of the UE 100 used for communication with the first network 200A in order to perform communication with the second network 200B. Note that the communication capability of the UE 100 does not simply indicate the capability of the UE 100, and may be referred to as, for example, a communication resource allocated to the UE 100, a radio resource scheduled to the UE 100, or the like. The temporarily restricted communication capability may be a communication resource associated with the transceiver (that is, the transmitter and/or the receiver) used for communication with the second network 200B.

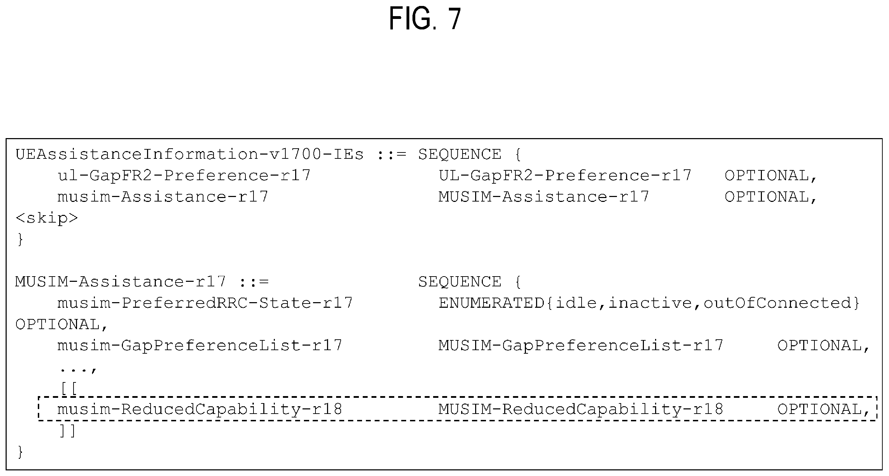

As illustrated in Fig. 7, the controller 130 (for example, the RRC processor 131) may include information for the temporary capability restriction of the UE 100 (for example, multi-universal subscriber identity module (MUSIM)-ReducedCapability) in a MUSIM assistance information element (that is, MUSIM-Assistance) used to provide MUSIM assistance information. The communicator 120 may transmit the MUSIM assistance information including the information for the temporary capability restriction of the UE 100 to the first network 200A. The communicator 120 may transmit a UE assistance information (that is, UEAssistanceInformation) message including the MUSIM assistance information including the information for the temporary capability restriction of the UE 100 to the first network 200A.

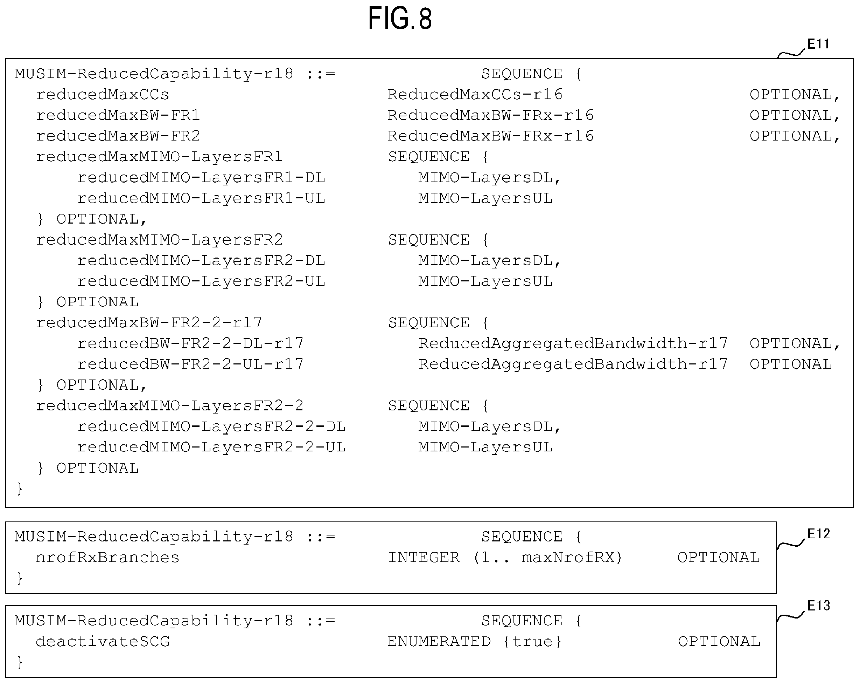

As illustrated in E11 of Fig. 8, the controller 130 may include, as the information for the temporary capability restriction of the UE 100, at least one of information for restricting a secondary cell, information for restricting a frequency band, and information for restricting a multiple-input and multiple-output (MIMO) layer in the MUSIM assistance information element.

The information for restricting the secondary cell may be, for example, information for restricting a data schedulable secondary cell. The information for restricting the secondary cell may be, for example, information (specifically, reducedMaxCCs or reducedMaxCCs) indicating preference (preference) of the UE 100 for a reduction configuration corresponding to the maximum number of secondary cells. The information may be at least one of information (specifically, reducedCCsDL) indicating preference (preference) of the UE 100 for a reduction configuration corresponding to the maximum number of downlink secondary cells and information (specifically, reducedCCsDL) indicating preference (preference) of the UE 100 for a reduction configuration corresponding to the maximum number of uplink secondary cells. That is, the information for restricting the secondary cell may be information for restricting the maximum number of secondary cells. Here, as described above, the secondary cell may include a primary secondary cell. In addition, in the downlink, the cell may correspond to a downlink component carrier. In addition, in the uplink, the cell may correspond to an uplink component carrier. In the present embodiment, a case where the cell is configured may include a case where a downlink component carrier is configured and/or an uplink component carrier is configured. For example, the information for restricting the secondary cell may include information for restricting the maximum number of component carriers configured in the downlink and/or information for restricting the maximum number of component carriers configured in the uplink.

The information for restricting the frequency band may be, for example, information for restricting a data schedulable frequency band. The information (for example, ReducedMaxBW-FRx) for restricting the frequency band may be information about a maximum frequency band, information (for example, ReducedAggregatedBandwidth) about an aggregated bandwidth, information (for example, reducedMaxBW-FR1) about a maximum frequency band of FR1, or information (for example, reducedMaxBW-FR2 or reducedMaxBW-FR2-2) about a maximum frequency band of FR2. The information for restricting the frequency band may be, for example, at least one of information (specifically, reducedBW-FR1) indicating preference (preference) of the UE 100 for a reduction configuration corresponding to a maximum aggregated bandwidth over all the downlink carriers and all the uplink carriers in a frequency range 1 (FR1), information (specifically, reducedBW-FR2) indicating preference of the UE 100 for a reduction configuration corresponding to a maximum aggregated bandwidth over all the downlink carriers and all the uplink carriers in a frequency range 2-1 (FR2-1), and information (specifically, reducedBW-FR2-2) indicating preference of the UE 100 for a reduction configuration corresponding to a maximum aggregated bandwidth over all the downlink carriers and all the uplink carriers in the frequency range 2-2 (FR2-2). Note that a subcarrier spacing is 15 or 30 kHz in FR1, a subcarrier spacing is 120 or 240 kHz in FR2-1, and a subcarrier spacing is 120, 480, or 960 kHz in FR2-2.

The information for restricting the MIMO layer may be, for example, at least one of information (specifically, reducedMaxMIMO-LayersFR1, reducedMIMO-LayersFR1-DL, or reducedMIMO-LayersFR1-UL) indicating preference of the UE 100 for a reduction configuration corresponding to the maximum number of downlink MIMO layers or uplink MIMO layers of each serving cell operating in FR1, information (specifically, reducedMaxMIMO-LayersFR2, reducedMIMO-LayersFR2-DL, or reducedMIMO-LayersFR2-UL) indicating preference of the UE 100 for a reduction configuration corresponding to the maximum number of downlink MIMO layers or uplink MIMO layers of each serving cell operating in FR2-1, and information (specifically, reducedMaxMIMO-LayersFR2-2, reducedMIMO-LayersFR2-2-DL, or reducedMIMO-LayersFR2-2-UL) indicating preference of the UE 100 for a reduction configuration corresponding to the maximum number of downlink MIMO layers or uplink MIMO layers of each serving cell operating in FR2-2. Here, the serving cell may include a primary cell and/or a secondary cell.

As illustrated in E12 of Fig. 8, the controller 130 may include, as the information for the temporary capability restriction of the UE 100, information (for example, may be referred to as nrofRxBranches) indicating the number of transceivers (for example, transceivers) usable for communication with the first network 200A in the MUSIM assistance information element. The information may indicate the maximum number of transceivers usable for communication with the first network 200A. In addition, the controller 130 may include, as the information for the temporary capability restriction of the UE 100, at least one of information indicating the number (or the maximum number) of transmitters (for example, transmitters) usable for communication with the first network 200A and information indicating the number (or the maximum number) of receivers (for example, receivers) usable for communication with the first network 200A in the MUSIM assistance information element.

As illustrated in E13 of Fig. 8, the controller 130 may include, as the information for the temporary capability restriction of the UE 100, flag information (for example, may be referred to as deactivateSCG) for deactivating or releasing the secondary cell in the MUSIM assistance information element. The flag information may be, for example, information indicated by 1 bit. For example, in a case where "true" is set in the flag information, the flag information may indicate the deactivation of the secondary cell, may indicate the release of the secondary cell, may indicate the deactivation of the secondary cell group, or may indicate release of the secondary cell group. In a case where the UE 100 executes the dual connectivity, the controller 130 may include, as the information for the temporary capability restriction of the UE 100, the flag information in the MUSIM assistance information element. Note that, in the dual connectivity, the UE 100 in the RRC connected state uses radio resources provided by two different schedulers at different locations in two different nodes (for example, Next Generation-Radio Access Network (NG-RAN)) connected via a non-ideal backhaul.

In addition, the controller 130 may include specified information to be set in an overheating assistance information element (that is, OverheatingAssistance) in a case where an overheating assistance indication is provided in order to perform communication with the second network 200B. Usually, the controller 130 may include the specified information in the overheating assistance information element based on detection of internal overheating in the UE 100. However, regardless of whether or not the internal overheating is detected in the UE 100, the controller 130 may include the specified information in the overheating assistance information element in order to perform communication with the second network 200B. The specified information may be, for example, reducedMaxCCs, reducedMaxBW-FR1, reducedMaxBW-FR2, reducedMaxBW-FR2-2, reducedMaxMIMO-LayersFR1, reducedMaxMIMO-LayersFR2, and reducedMaxMIMO-LayersFR2-2. Accordingly, regardless of whether the internal overheating is detected, the communicator 120 may transmit, as the information for the temporary capability restriction of the UE 100, the overheating assistance information element to the first network 200A in order to perform communication with the second network 200B.

In addition, the controller 130 may include, as the information for the temporary capability restriction of the UE 100, information for deactivating or releasing the secondary cell in a UE assistance information message. Here, the controller 130 may include the information for the temporary capability restriction of the UE 100 in an information element different from the MUSIM assistance information element among information elements included in the UE assistance information message. For example, the controller 130 may include the specified information (specifically, scg-DeactivationPreference) to be included in the UE assistance information based on the preference of the secondary cell group to be deactivated in order to perform communication with the second network 200B. Accordingly, the communicator 120 may transmit, as the information for the temporary capability restriction of the UE 100, information for deactivating or releasing the secondary cell to the first network 200A.

Note that, in a case where the UE 100 is in a state of performing simultaneous parallel communication with the first network 200A by using a plurality of transceivers, the communicator 120 may transmit the information for the temporary capability restriction of the UE 100 to the first network 200A. The UE 100 may transmit the information for the temporary capability restriction of the UE 100 to the first network 200A in a case where all the transceivers are used for the communication, or may transmit the information for the temporary capability restriction of the UE 100 to the first network 200A in a case where a plurality of transceivers are used even in a case where a part of the transceivers are not used for the communication.

The controller 214 of the base station 210A may determine whether or not to temporarily restrict the communication capability of the UE 100 used for communication with the first network 200A based on the information for the temporary capability restriction of the UE 100. In a case where it is determined to temporarily restrict the communication capability of the UE 100, the controller 214 of the base station 210A may execute processing of step S106. In a case where it is determined not to temporarily restrict the communication capability of the UE 100, the controller 214 of the base station 210A may end the processing.

### Step S106:

The network communicator 213 of the base station 210A that manages the P cell 210P may transmit a scheduling stop instruction to another base station 210A that manages the S cell 210S. In a case where the P cell 210P and the S cell 210S are managed, the base station 210A may transmit the scheduling stop instruction from an entity that manages the P cell 210P to an entity that manages the S cell 210S inside the controller 214.

The scheduling stop instruction may be an instruction about stopping the scheduling allocated to the UE 100 or an instruction about stopping a part of the scheduling allocated to the UE 100. The scheduling stop instruction may include at least a part of the information for the temporary capability restriction of the UE 100.

The controller 214 of the base station 210A that manages the S cell 210S may temporarily restrict the communication capability of the UE 100 based on the scheduling stop instruction. The network communicator 213 of the base station 210A may transmit a response message indicating that the scheduling stop is executed to the base station 210A that manages the P cell 210P. The controller 214 of the base station 210A that manages the P cell 210P may execute processing of step S107 based on the reception of the response message.

### Step S107:

The radio communicator 212 of the base station 210A transmits, to the UE 100, a message (for example, RRC reconfiguration message) including configuration information for temporarily restricting the communication capability of the UE 100 in the P cell 210P. The communicator 120 of the UE 100 receives the message including the configuration information from the P cell 210P (the first network 200A). The message may be a response to the information for the temporary capability restriction of the UE 100.

The configuration information may include information indicating a configuration (specifically, reduction configuration) of at least one of the secondary cell (or the secondary cell group), the frequency band, and the MIMO layer.

The controller 130 (for example, the RRC processor 131) executes the restriction of the communication capability based on the configuration information. The controller 130 may reduce or release the secondary cell or the secondary cell group based on the configuration information. The controller 130 may reduce the frequency band based on the configuration information. The controller 130 may reduce the number of MIMO layers based on the configuration information.

The controller 130 executes control to continue communication with the first network 200A by using the communication capability not temporarily restricted among communication capabilities of the UE 100 via a part (for example, the first transceiver 121) of the plurality of transceivers. Communication with the first network 200A may be performed via the first transceiver 121 based on RRC configurations based on the configuration information received from the first network 200A. For example, the controller 130 may maintain an RRC configuration used for communication with the first network 200A via the first transceiver 121. The controller 130 may release at least a part of the RRC configurations used for communication with the first network 200A via the second transceiver 122, and may start communication with the first network 200A via the first transceiver 121 based on the remaining RRC configuration.

On the other hand, the controller 130 executes control for ending communication with the first network 200A via a part (for example, the second transceiver 122) of the plurality of transceivers. For example, the controller 130 may release the RRC configuration used for communication with the first network 200A via the second transceiver 122. The controller 130 performs control to start connection with second network 200B by executing the restriction of the communication capability.

### Step S108:

The RRC processor 131 provides a second NW switching preparation complete notification to the NAS processor 132 based on the execution of the restriction of the communication capability. The NAS processor 132 receives the second NW switching preparation complete notification from the RRC processor 131. The second NW switching preparation complete notification may be a notification indicating that preparation for establishing the RRC connection with the second network 200B is completed.

### Step S109:

The NAS processor 132 provides a second NW connection instruction to the RRC processor 131 based on the reception of the second NW switching complete notification. The RRC processor 131 receives the second NW connection instruction from the NAS processor 132. The second NW connection instruction may be an instruction for establishing the RRC connection with the second network 200B.

### Step S110:

The RRC processor 131 performs processing of starting the RRC connection with the base station 210B based on the second NW connection instruction. The RRC processor 131 executes, for example, RRC setup procedure (Setup) or RRC reestablishment procedure (Reestablishment).

### Step S111:

The RRC processor 131 provides the second NW switching complete notification to the NAS processor 132 in response to the establishment of the RRC connection with the base station 210B. The NAS processor 132 receives the second NW switching complete notification from the RRC processor 131.

The second NW switching complete notification may be a notification indicating that the establishment of the RRC connection is completed in the second network 200B. The second NW switching complete notification may be a notification indicating that transition to the RRC connected state is completed in the second network 200B.

### Step S112:

The UE 100 starts communication with the second network 200B. The controller 130 of the UE 100 may start processing of performing communication corresponding to the paging message in the second network 200B. The controller 130 of the UE 100 may control communication with the second network 200B via the second transceiver 122. Note that the controller 130 may continuously control communication with the first network 200A via the first transceiver 121.

As described above, the communicator 120 of the UE 100 transmits, to the first network 200A, the information for the temporary capability restriction of the UE 100 for temporarily restricting the communication capability of the UE 100 used for communication with the first network 200A in order to perform communication with the second network 200B. The radio communicator 212 of the base station 210A receives the information for the temporary capability restriction of the UE 100 from the UE 100. As a result, the first network 200A can recognize the temporary restriction of the communication capability of the UE 100. Accordingly, the UE 100 and the first network 200A can be easily synchronized with each other regarding the temporary restriction of the communication capability.

In addition, the controller 130 of the UE 100 may include the information for the temporary capability restriction of the UE 100 in the MUSIM assistance information element. The communicator 120 of the UE 100 may transmit the MUSIM assistance information element including the information for the temporary capability restriction of the UE 100 to the first network 200A. The first network 200A can grasp that the UE 100 is transmitting the information for the temporary capability restriction of the UE 100 in order to perform communication with the second network 200B.

In addition, the controller 130 of the UE 100 may include, as the information for the temporary capability restriction of the UE 100, at least one of the information for restricting the secondary cell, the information for restricting the frequency band, and the information for restricting the multiple-input and multiple-output (MIMO) layer in the MUSIM assistance information element. As a result, the UE 100 can notify the first network 200A that any of the secondary cell, the frequency band, and the MIMO layer is (preferred to be) restricted.

In addition, the controller 130 of the UE 100 may include, as the information for the temporary capability restriction of the UE 100, information indicating the number of transceivers usable for communication with the first network 200A in the MUSIM assistance information element. As a result, the UE 100 can notify the first network 200A of (the preference of) the transceiver usable for communication with the first network 200A.

In addition, the controller 130 of the UE 100 may include, as the information for the temporary capability restriction of the UE 100, flag information for deactivating or releasing the secondary cell in the MUSIM assistance information element. As a result, the UE 100 can notify the first network 200A that the secondary cell is (preferred to be) deactivated or released. In addition, since the flag information has a small amount of information (for example, 1 bit), radio resources can be saved.

In addition, the communicator 120 may transmit the overheating assistance information element to the first network 200A based on the detection of the internal overheating. The communicator 120 may transmit, as the information for the temporary capability restriction of the UE 100, the overheating assistance information element to the first network 200A in order to perform communication with the second network 200B regardless of whether the internal overheating is detected. As a result, since it is not necessary to newly specify the information element including the information for the temporary capability restriction of the UE 100, the influence on the specification can be reduced.

In addition, the communicator 120 may transmit, as the information for the temporary capability restriction of the UE 100, the information for deactivating or releasing the secondary cell to the first network 200A. As a result, the UE 100 can notify the first network 200A that the secondary cell is (preferred to be) deactivated or released.

In addition, the communicator 120 may receive configuration information for restricting the communication capability from the first network 200A. The controller 130 may execute the restriction of the communication capability based on the configuration information. That is, the controller 130 may execute the restriction of the communication capability in the first network 200A based on the configuration information. As a result, since the UE 100 can restrict the communication capability based on the configuration information, it is possible to facilitate appropriate synchronization with respect to the temporary restriction of the communication capability between the UE 100 and the first network 200A.

In addition, the communicator 120 may include a plurality of transceivers. In a case where the UE 100 is in a state of performing simultaneous parallel communication with the first network 200A by using the plurality of transceivers, the communicator 120 may transmit the information for the temporary capability restriction of the UE 100 to the first network 200A. For example, in a case where the UE 100 uses a part of the plurality of transceivers for communication with the first network 200A, since communication with the second network 200B can be performed by using the remaining transceiver, the transmission of the information for the temporary capability restriction of the UE 100 to the first network 200A can be omitted.

### (2) Second Operation Example

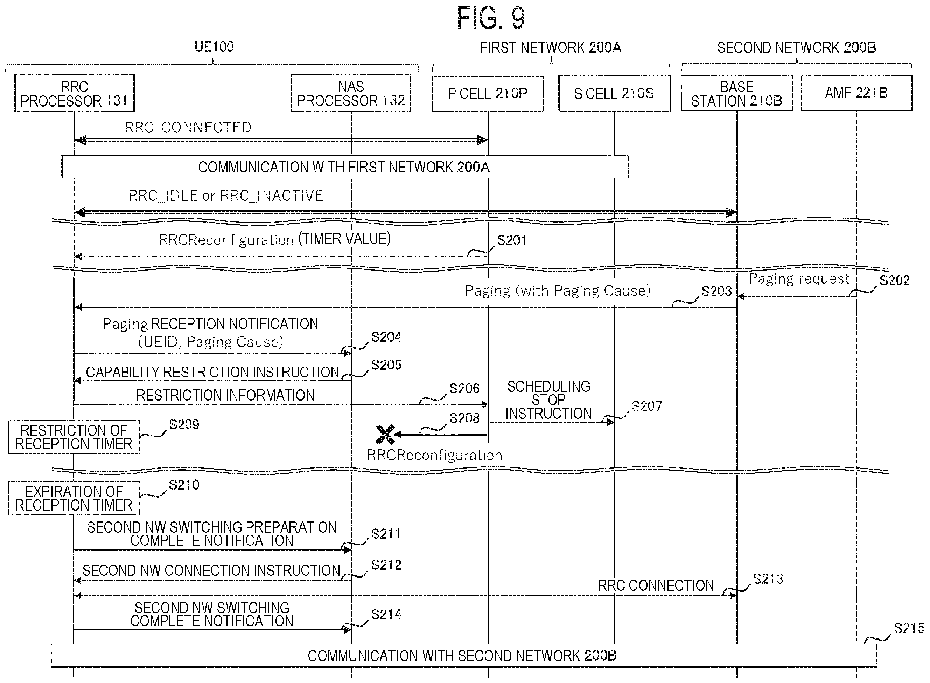

With reference to Figs. 9 to 11, a second operation example will be described focusing on differences from the above-described operation example. In the second operation example, a case where the UE 100 cannot receive the configuration information for restricting the communication capability from the first network 200A will be described.

### Step S201:

As illustrated in Fig. 9, the radio communicator 212 of the base station 210A may transmit, to the UE 100, a message (for example, RRC reconfiguration message) including a timer value in the P cell 210P. The UE 100 may receive the message including the timer value from the first network 200A (P cell 210P).

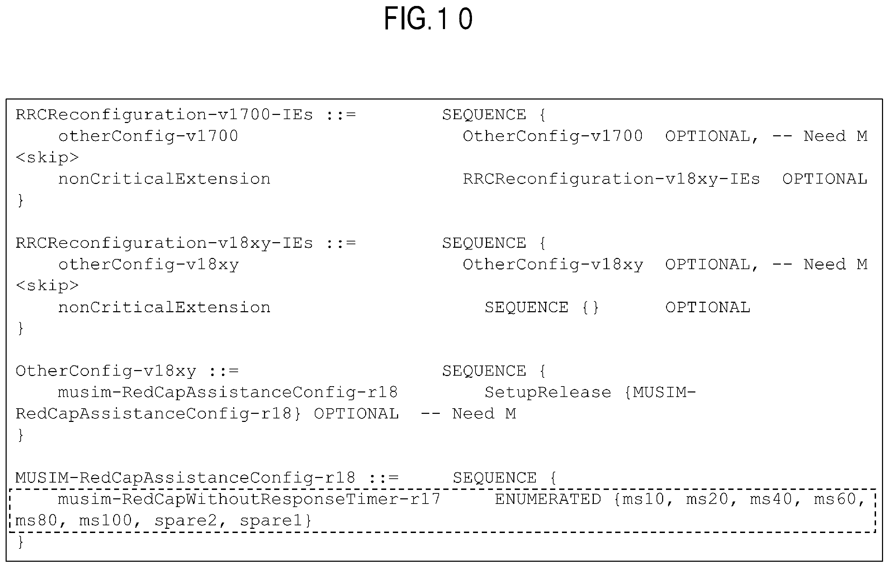

The timer value may be configured to a timer (hereinafter, referred to as a reception timer) that starts after the information for the temporary capability restriction of the UE 100 is transmitted. As illustrated in Fig. 10, the timer value may be referred to as, for example, musim-RedCapWithoutResponseTimer. The controller 130 of the UE 100 may set the timer value in the reception timer. The controller 130 may set the timer value when the reception timer is started.

The timer value may be a designated timer value (for example, musim-LeaveWithoutResponseTimer) to be configured to a designated timer (for example, T346g) started in response to transmission of the UE assistance information message including information (for example, musim-PreferredRRC-State) indicating a preferred RRC state. The controller 130 of the UE 100 may use a designated timer value as a timer value to be configured in the reception timer. Accordingly, the controller 130 of the UE 100 may set the designated timer value not only in the designated timer but also in the reception timer. The controller 130 may set a designated timer value when the reception timer is started.

Note that the information indicating the preferred RRC state may indicate any of idle, inactive, and out-of-connected. The idle state may indicate that the UE 100 is preferred to be released from the RRC connected state and to transition to the RRC idle state. The inactive state may indicate that the UE 100 is preferred to be released from the RRC connected state and to transition to the RRC inactive state. The out-of-connected state may indicate that the UE 100 is released from the RRC connected state and there is no RRC state preferred as a transition destination.

### Steps S202 to S207:

Steps S202 to S207 are similar to steps S101 to S 106.

### Step S208:

As in step S107, the radio communicator 212 of the base station 210A transmits, to the UE 100, the message including the configuration information for temporarily restricting the communication capability of the UE 100 in the P cell 210P. However, in the present operation example, the communicator 120 of the UE 100 cannot receive the message including the configuration information from the P cell 210P (the first network 200A).

### Step S209:

After the information for the temporary capability restriction of the UE 100 is transmitted, the controller 130 of the UE 100 determines whether or not to execute the restriction of the communication capability. In the present operation example, the controller 130 starts the reception timer in order to determine whether or not to execute the restriction of the communication capability.

The controller 130 may start the reception timer in response to the transmission of the information for the temporary capability restriction of the UE 100. In addition, the controller 130 may start the reception timer in response to reception of reception confirmation information (so-called ACK) for the information for the temporary capability restriction of the UE 100. The controller 130 of the UE 100 may receive the reception confirmation information from the first network 200A in a lower layer (for example, RLC) than the RRC layer. A processor in the lower layer may provide, for example, information (for example, indication) indicating that the reception confirmation information is received to the RRC processor 131. The RRC processor 131 may start the reception timer based on the information.

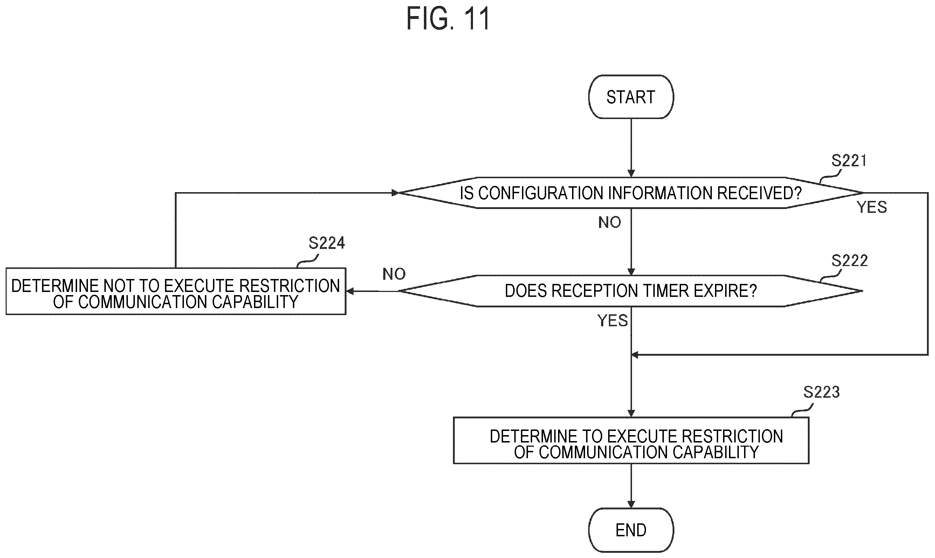

Here, as illustrated in Fig. 11, the controller 130 of the UE 100 may execute the following operations based on the initiation of the reception timer.

In step S221, the controller 130 may determine whether or not the configuration information for temporarily restricting the communication capability of the UE 100 is received. In a case where it is determined that the configuration information is not received, the controller 130 may execute processing of step S222. On the other hand, as in step S107 of the first operation example, in a case where it is determined that the configuration information is received, the controller 130 may execute processing of step S223.

In step S222, the controller 130 may determine whether or not the reception timer expires. In a case where it is determined that the reception timer expires, the controller 130 may execute the processing of step S223. Accordingly, even in a case where the configuration information is not received, the controller 130 may execute the processing of step S223 based on the expiration of the reception timer. On the other hand, in a case where it is determined that the reception timer does not expire, the controller 130 may execute processing of step S224.

In a case where the reception timer expires, the controller 130 may consider that the data scheduling for the UE 100 in the S cell 210S is stopped. In a case where it is considered that the data scheduling is stopped as described above, the controller 130 may execute the processing of step S223.

In step S223, the controller 130 may determine to execute the restriction of the communication capability.

In step S224, the controller 130 may determine not to execute the restriction of the communication capability. In a case where it is determined not to execute the restriction of the communication capability, the controller 130 may execute processing of step S221. That is, in a case where the reception timer expires, the controller 130 may autonomously execute the restriction of the communication capability. That is, the reception timer may be used to execute the restriction of the communication capability without a response (that is, the configuration information) from the first network 200A. For example, in a case where the reception timer expires, the UE 100 may autonomously execute the restriction of the communication capability in the first network 200A, and may start communication with the second network 200B. Here, a case where communication with the second network 200B is started may include a case where the UE 100 transitions from the RRC idle state to the RRC connected state in the second network 200B. In addition, in a case where communication with the second network 200B is started may include a case where the UE 100 transitions from the RRC inactive state to the RRC connected state in the second network 200B. In addition, for example, in a case where the reception timer expires, the UE 100 may autonomously execute the restriction of the communication capability in the first network 200A, may maintain the RRC connected state in the first network 200A, and may transition to the RRC connected state in the second network 200B.

### Step S210:

The reception timer expires. As described above, in the present operation example, the controller 130 may determine to execute the restriction of the communication capability. In a case where it is determined to execute the restriction of the communication capability, the controller 130 execute the restriction of the communication capability, as in the first operation example. Since the configuration information is not received from the first network 200A, for example, the controller 130 may reduce or release the secondary cell or the secondary cell group, may reduce the frequency band, or may reduce the number of MIMO layers, based on the content of the information for the temporary capability restriction of the UE 100. In a case where it is determined to execute the restriction of the communication capability, the controller 130 may execute the restriction of the communication capability by releasing some radio resource control (RRC) configurations. The controller 130 may execute control for ending communication with the first network 200A via a part of the plurality of transceivers (for example, the second transceiver 122).

### Steps S211 to S215:

Steps S211 to S215 are similar to steps S108 to S112.

As described above, communicator 120 transmits the information for the temporary capability restriction of the UE 100 to first network 200A. After the information for the temporary capability restriction of the UE 100 is transmitted, the controller 130 determines whether or not to execute the restriction of the communication capability. In a case where it is determined to execute the restriction of the communication capability, the controller 130 performs control to start connection with the second network 200B by execute the restriction of the communication capability. Since the UE 100 determines whether or not to execute the restriction of the communication capability after the information for the temporary capability restriction of the UE 100 is transmitted, the communication capability of the UE 100 can be appropriately restricted.

In addition, in a case where the configuration information for restricting the communication capability is received from the first network 200A, the communicator 120 determines to execute the restriction of the communication capability based on the configuration information. As a result, the UE 100 and the first network 200A can be properly synchronized with each other regarding the temporary restriction of the communication capability.

In addition, even in a case where the configuration information is not received, the controller 130 may determine to execute the restriction of the communication capability based on the expiration of the reception timer. As a result, even in a case where the configuration information cannot be received, communication with the second network 200B can be performed in order to execute the restriction of the communication capability. In addition, since it is determined to execute the restriction of the communication capability based on the expiration of the reception timer, even in a case where the configuration information cannot be received, the synchronization with the first network 200A can be ensured regarding the temporary restriction of the communication capability at least until the reception timer expires.

In addition, the communicator 120 may receive the reception confirmation information for the information for the temporary capability restriction of the UE 100 from the first network 200A. The controller 130 may start the reception timer in response to the reception of the reception confirmation information. As a result, the UE 100 can grasp that the information for the temporary capability restriction of the UE 100 for temporarily restricting the communication capability of the UE 100 used for communication with the first network 200A is notified to the first network 200A. The UE 100 cannot perform control to temporarily restrict the communication capability of the UE 100 without the information for the temporary capability restriction of the UE 100 reaching the first network 200A.

In addition, the communicator 120 may receive the timer value to be configured in the reception timer from the first network 200A. As a result, the first network 200A can manage a time until the UE 100 performs control to temporarily restrict the communication capability. Accordingly, even in a case where the configuration information is not transmitted, the first network 200A can grasp whether or not the UE 100 is performing the control to temporarily restrict the communication capability.

In addition, the controller 130 may control a designated timer started in response to the transmission of the UE assistance information message including the information indicating the preferred RRC state. The communicator 120 may receive the designated timer value to be configured in the designated timer from the first network 200A. The controller 130 may use the designated timer value as the timer value to be configured in the reception timer. As a result, it is not necessary to transmit both the designated timer value and the timer value for the reception timer from the first network 200A to the UE 100, and the radio resources can be saved. In addition, since it is not necessary to newly specify the information element including the configuration information, the influence on the specification can be reduced.

In addition, in a case where it is determined to execute the restriction of the communication capability, the controller 130 may execute the restriction of the communication capability by releasing a part of the RRC configurations. The controller 130 releases the RRC configuration used for the communication via the second transceiver 122, or releases a part of the RRC configurations configured in the UE 100 to switch the communication via the second transceiver 122 to the communication via the first transceiver 121. As a result, the second transceiver 122 can be used for communication with the second network 200B.

### (3) Modification 1 of Second Operation Example

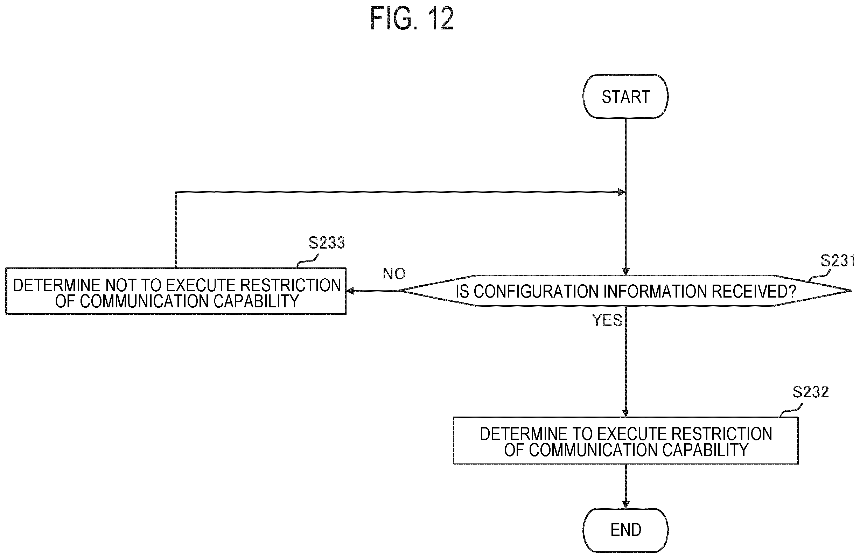

Modification 1 of the second operation example will be described with reference to Fig. 12, focusing on differences from the above-described operation example. In Modification 1 of the second operation example, a case where the UE 100 does not execute the restriction of the communication capability until the configuration information is received from the first network 200A will be described.

As illustrated in Fig. 12, as in step S211, in step S231, the controller 130 may determine whether or not the controller 130 receives the configuration information for temporarily restricting the communication capability of the UE 100. In a case where it is determined that the configuration information is received, the controller 130 may execute processing of step S232. On the other hand, in a case where it is determined that the configuration information is not received, the controller 130 may execute processing of step S233.

In step S232, the controller 130 determines to execute the restriction of the communication capability. In step S233, the controller 130 determines not to execute the restriction of the communication capability.

As described above, the controller 130 may determine not to execute the restriction of the communication capability until the configuration information is received. As a result, since the UE 100 does not execute the restriction of the communication capability until the first network 200A transmits the configuration information, the UE 100 and the first network 200A can be reliably synchronized with each other regarding the temporary restriction of the communication capability.

### (4) Modification 2 of Second Operation Example

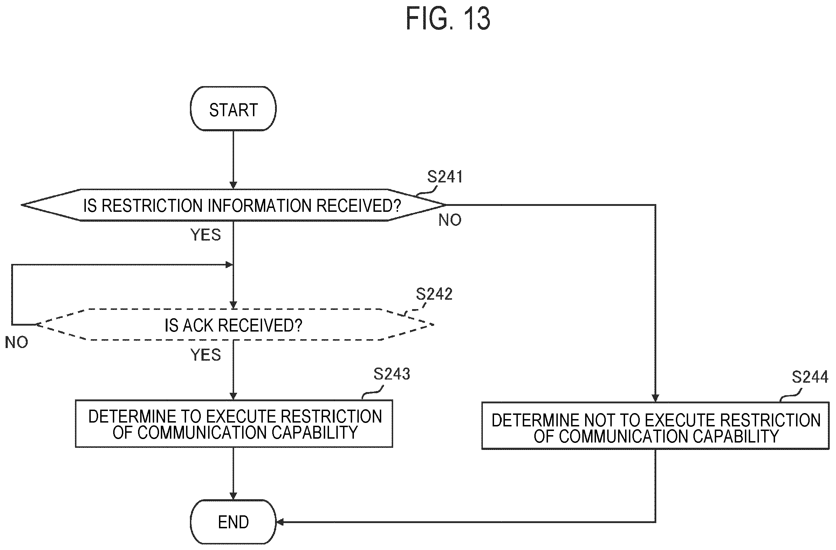

Modification 2 of the second operation example will be described with reference to Fig. 13, focusing on differences from the above-described operation examples. In Modification 2 of the second operation example, a case where the UE 100 executes the restriction of the communication capability regardless of whether or not the configuration information is received from the first network 200A will be described.

As illustrated in Fig. 13, in step S241, the controller 130 determines whether or not the information for the temporary capability restriction of the UE 100 for temporarily restricting the communication capability of the UE 100 is transmitted. In a case where it is determined that the information for the temporary capability restriction of the UE 100 is transmitted, the controller 130 may execute processing of step S242. In addition, in a case where it is determined that the information for the temporary capability restriction of the UE 100 is transmitted, the controller 130 may execute the processing of step S242 without performing the processing of step S242. On the other hand, in a case where it is determined that the information for the temporary capability restriction of the UE 100 is not transmitted, the controller 130 may execute processing of step S244.

In step S242, the controller 130 may determine whether or not the reception confirmation information (so-called ACK) for the information for the temporary capability restriction of the UE 100 is received. In a case where it is determined that the reception confirmation information is received, the controller 130 may execute processing of step S243. The controller 130 may determine that the reception confirmation information is received based on the fact that the RRC processor 131 receives the information (for example, indication) indicating that the reception confirmation information is received from the first network 200A from the processor in the lower layer. On the other hand, in a case where it is determined that the reception confirmation information is not received, the controller 130 may repeatedly execute the processing of step S242.

In step S243, the controller 130 determines to execute the restriction of the communication capability. In step S244, the controller 130 determines not to execute the restriction of the communication capability.

As described above, the controller 130 may determine to execute the restriction of the communication capability regardless of whether or not the configuration information for restricting the communication capability is received from the first network 200A. As a result, the UE 100 can start communication with the second network 200B without delay while synchronizing the temporary restriction of the communication capability between the UE 100 and the first network 200A by transmitting the information for the temporary capability restriction of the UE 100 to the first network 200A.

In addition, the controller 130 may determine to execute the restriction of the communication capability based on the reception of the reception confirmation information from the first network 200A. As a result, the UE 100 cannot perform control to temporarily restrict the communication capability of the UE 100 without the information for the temporary capability restriction of the UE 100 reaching the first network 200A.

### (5) Third Operation Example

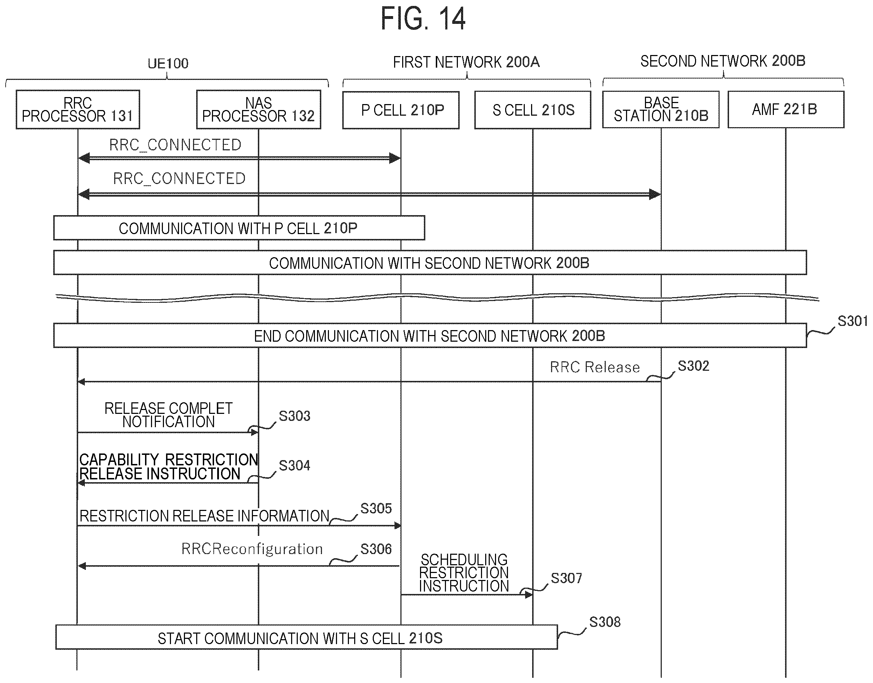

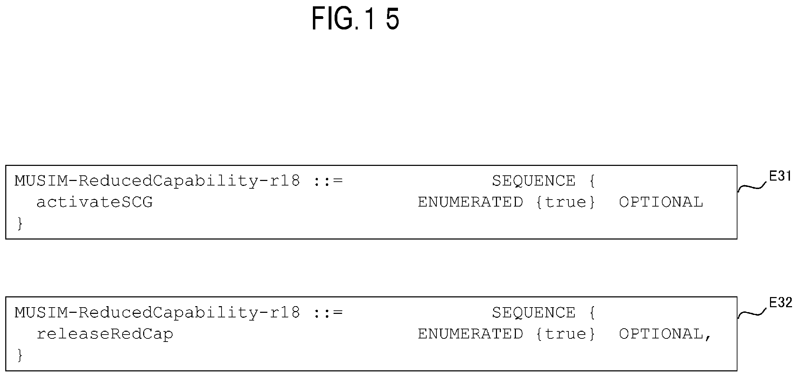

A third operation example will be described with reference to Figs. 14 and 15, focusing on differences from the above-described operation examples. In the third operation example, a case where the UE 100 transmits, to the first network 200A, the information for releasing or changing the temporary restriction of the communication capability for communication with the second network 200B will be described.

In the third operation example, the UE 100 is in the RRC connected state in the first network 200A. The UE 100 performs communication with the first network 200A. Specifically, the UE 100 performs communication with the P cell 210P (or MCG). On the other hand, the UE 100 does not perform communication with the S cell 210S (or SCG).

In addition, the UE 100 is in the RRC connected state in the second network 200B. The UE 100 performs communication with the second network 200B. The UE 100 may use the first transceiver 121 for communication with the first network 200A, and may use the second transceiver 122 for communication with the second network 200B.

As in the first operation example, the controller 130 of the UE 100 temporarily restricts the communication capability of the UE 100 used for communication with the first network 200A in order to perform communication with the second network 200B.

### Step S301:

The UE 100 ends communication with the second network 200B.

### Step S302:

The radio communicator 212 of the base station 210B transmits an RRC release message to the UE 100. The communicator 120 of the UE 100 receives the RRC release message from the base station 210B. The controller 130 of the UE 100 transitions from the RRC connected state to the RRC idle state or the RRC inactive state in the second network 200B based on the reception of the RRC release message. As a result, the UE 100 may release the RRC connection in the second network 200B.

### Step S303:

The controller 130 (for example, the RRC processor 131) may provide a release complete notification indicating release completion of the RRC connection to the NAS processor 132. In response to the reception of the release complete notification, the controller 130 (for example, the NAS processor 132 or a processor of the upper layer than the NAS layer) may determine whether or not to release the temporary restriction of the communication capability of the UE 100 used for communication with the first network 200A. In addition, the controller 130 may determine whether or not to change the temporary restriction of the communication capability.

For example, the controller 130 may determine to release or change the temporary restriction based on the transition to the RRC idle state in the second network 200B. For example, the controller 130 may determine not to release or change the temporary restriction based on the transition to the RRC inactive state in the second network 200B.

The controller 130 may determine whether or not to release the temporary restriction or may determine whether or not to change the temporary restriction, based on the service provided from the first network 200A. In a case where the service provided from the first network 200A is the voice service, the controller 130 may determine to release the temporary restriction. In a case where the service provided from the first network 200A is a service other than the voice service, the controller 130 may determine not to release the temporary restriction. In this case, the controller 130 may determine to change the temporary restriction.

For example, the controller 130 may determine whether or not to release the temporary restriction, and may determine whether or not to change the temporary restriction, based on the input from the user. In a case where the input from the user gives a priority to communication with the first network 200A over communication with the second network 200B, the controller 130 may determine to release the temporary restriction. In a case where the input from the user does not give the priority to communication with the first network 200A over communication with the second network 200B, the controller 130 may determine not to release the temporary restriction.

Note that the determination may be performed in the NAS processor 132, or the determination may be performed in an upper layer than the NAS processor 132. In a case where the determination is performed in the upper layer, a determination result may be provided to the NAS processor 132.

In a case where it is determined to release or change the temporary restriction of the communication capability of the UE 100 used for communication with the first network 200A, the NAS processor 132 executes processing of step S304. On the other hand, in a case where it is determined not to release or change the temporary restriction of the communication capability of the UE 100 used for communication with the first network 200A, the controller 130 may end the processing of the present operation without executing the processing of step S304.

### Step S304:

As illustrated in Fig. 14, in a case where it is determined to release the temporary restriction of the communication capability of the UE 100 used for communication with the first network 200A, the NAS processor 132 provides a capability restriction release instruction to the RRC processor 131. The RRC processor 131 receives the capability restriction release instruction from the NAS processor 132. The capability restriction release instruction may be an instruction about the transmission of the restriction removal information to be described later. The capability restriction release instruction may indicate the content of the restriction removal information.

When it is determined to change the temporary restriction of the communication capability of the UE 100 used for communication with the first network 200A, the NAS processor 132 provides a capability restriction change instruction to the RRC processor 131. The RRC processor 131 receives the capability restriction change instruction from the NAS processor 132. The capability restriction change instruction may be an instruction about the transmission of the restriction change information to be described later. The capability restriction change instruction may indicate the content of the restriction change information.

### Step S305:

The controller 130 (RRC processor 131) performs control to transmit the restriction removal information to the first network 200A based on the capability restriction release instruction in order to perform communication with the second network 200B. The communicator 120 transmits the restriction removal information to the first network 200A in order to perform communication with the second network 200B. Specifically, the communicator 120 transmits the restriction removal information to the P cell 210P. The communicator 120 may transmit a message including the restriction removal information to the P cell 210P. The radio communicator 212 of the base station 210A receives the restriction removal information from the UE 100 in the P cell 210P. The restriction removal information is used to release the temporary restriction of the communication capability of the UE 100 used for communication with the first network 200A in order to perform communication with the second network 200B.

The controller 130 (for example, the RRC processor 131) may include the restriction removal information (for example, MUSIM-ReducedCapability) in the MUSIM assistance information element used to provide the MUSIM assistance information. The communicator 120 may transmit the MUSIM assistance information including the restriction removal information to the first network 200A. The communicator 120 may transmit the UE assistance information message including the MUSIM assistance information including the restriction removal information to the first network 200A.

The controller 130 may set an empty value to at least one of the information for restricting the secondary cell, the information for restricting the frequency band, and the information for restricting the multiple-input and multiple-output (MIMO) layer. The controller 130 may include, as the restriction removal information, the information in which the empty value is set in the MUSIM assistance information element. The empty value may be a value such as zero or a null value. Alternatively, the controller 130 may not include any of the information for restricting the secondary cell, the information for restricting the frequency band, and the information for restricting the multiple-input and multiple-output (MIMO) layer in the MUSIM assistance information element. In this case, a MUSIM assistance information element that does not include information for temporarily restricting the communication capability may be regarded as the restriction removal information.

Note that the information for restricting the secondary cell, the information for restricting the frequency band, and the information for restricting the multiple-input and multiple-output (MIMO) layer are the same as those in the first operation example.

The controller 130 may include, as the restriction removal information, information indicating zero as the number of transceivers usable for communication with the first network 200A in the MUSIM assistance information element. The information may indicate the maximum number of transceivers usable for communication with the first network 200A. In addition, the controller 130 may include, as the information for the temporary capability restriction of the UE 100, at least one of information indicating zero as the number (or maximum number) of transmitters (for example, transmitters) usable for communication with the first network 200A and information indicating zero as the number (or maximum number) of receivers (for example, receivers) usable for communication with the first network 200A in the MUSIM assistance information element. The controller 130 may set an empty value to the information indicating the numbers of transceivers, transmitters, or receivers.

As illustrated in E31 of Fig. 15, the controller 130 may include, as the restriction removal information, flag information (for example, may be referred to as activateSCG) for activating the secondary cell in the MUSIM assistance information element. The flag information may be, for example, information indicated by 1 bit. For example, in a case where "true" is set in the flag information, the flag information may indicate the activation of the secondary cell, or may indicate the activation of the secondary cell group. In a case where the UE 100 executes the dual connectivity before the communication capability is temporarily restricted, the controller 130 may include, as the restriction removal information, the flag information in the MUSIM assistance information element.

In addition, the controller 130 may not include the specified information to be set in the overheating assistance information element in a case where the overheating assistance indication is provided. Usually, the controller 130 does not include the specified information in the overheating assistance information element based on the fact that the internal overheating is no longer detected in the UE 100 (for example, no longer experience overheating conditions). However, regardless of whether or not the internal overheating is no longer detected in the UE 100, the controller 130 may not include the specified information in the overheating assistance information element. Accordingly, regardless of whether or not the internal overheating is no longer detected, the communicator 120 may transmit, as the restriction removal information, the overheating assistance information element not including the specified information to the first network 200A in order to perform communication with the second network 200B.

In addition, as illustrated in E32 of Fig. 15, the controller 130 may include, as the restriction removal information, information (for example, releaseRedCap) indicating the release of the temporary restriction of the communication capability of the UE 100 used for communication with the first network 200A in the MUSIM assistance information element. For example, in a case where "true" is set in the information, the flag information may indicate that the temporary restriction of the communication capability is released.

In addition, the controller 130 may include, as the information for the temporary capability restriction of the UE 100, information for activating the secondary cell in the UE assistance information message. Here, the controller 130 may include the restriction removal information in an information element different from the MUSIM assistance information element among the information elements included in the UE assistance information message. For example, the controller 130 may include specified information (specifically, scg-ActivationPreference) to be included in the UE assistance information based on the preference of the secondary cell group to be activated. Accordingly, the communicator 120 may transmit, as the information for the temporary capability restriction of the UE 100, the information for activating the secondary cell to the first network 200A.

In addition, the controller 130 (RRC processor 131) may perform control to transmit the restriction change information to the first network 200A based on the capability restriction change instruction. The communicator 120 may transmit the restriction change information to the first network 200A. Specifically, the communicator 120 may transmit the restriction change information to the P cell 210P. The communicator 120 may transmit a message including the restriction change information to the P cell 210P. The radio communicator 212 of the base station 210A receives the restriction change information from the UE 100 in the P cell 210P. The restriction change information is used to change the temporary restriction of the communication capability of the UE 100 used for communication with the first network 200A in order to perform communication with the second network 200B.

The controller 130 (for example, the RRC processor 131) may include the restriction change information (for example, MUSIM-ReducedCapability) in the MUSIM assistance information element used to provide the MUSIM assistance information. The communicator 120 may transmit the MUSIM assistance information including the restriction change information to the first network 200A. The communicator 120 may transmit the UE assistance information message including the MUSIM assistance information including the restriction change information to the first network 200A.

The controller 130 may include, as the restriction change information, at least one of the information for restricting the secondary cell, the information for restricting the frequency band, and the information for restricting the multiple-input and multiple-output (MIMO) layer in the MUSIM assistance information element. The controller 130 may include, as the restriction change information, information indicating restriction of the communication capability after the change of, in the MUSIM assistance information element. Note that the information for restricting the secondary cell, the information for restricting the frequency band, and the information for restricting the multiple-input and multiple-output (MIMO) layer are the same as those in the first operation example.

The controller 130 may include, as the restriction change information, information (for example, may be referred to as nrofRxBranches) indicating the number of transceivers (for example, transceivers) usable for communication with the first network 200A in the MUSIM assistance information element. In addition, the controller 130 may include, as the restriction change information, at least one of information indicating the number (or the maximum number) of transmitters (for example, transmitters) usable for communication with the first network 200A and information indicating the number (or the maximum number) of receivers (for example, receivers) usable for communication with the first network 200A in the MUSIM assistance information element.

In addition, the controller 130 may include the specified information to be set in the overheating assistance information element in a case where the overheating assistance indication is provided. Usually, the controller 130 may include the specified information in the overheating assistance information element based on detection of internal overheating in the UE 100. However, regardless of whether or not the internal overheating is detected in the UE 100, the controller 130 may include the specified information in the overheating assistance information element. Accordingly, regardless of whether or not the internal overheating is detected, the communicator 120 may transmit, as the restriction change information, the overheating assistance information element to the first network 200A in order to perform communication with the second network 200B.

In addition, the controller 130 may include, together with the restriction removal information or the restriction change information, gap preference information (for example, musim-GapPreferenceList, MUSIM-GapPrefInfo, or the like) indicating a gap for a MUSIM operation, the gap being preferred to be configured by the UE 100, in the MUSIM assistance information element. In addition, the controller 130 may include the MUSIM assistance information element including the gap preference information in the UE assistance information message including the restriction removal information or the restriction change information. The controller 130 may include the gap preference information in the MUSIM assistance information element based on the end of communication with the second network 200B. Note that the controller 130 may include the MUSIM assistance information element including the gap preference information in the UE assistance information message including the restriction removal information or the restriction change information.

The gap preference information may include, for example, at least one of information (for example, musim-GapLength) indicating ae length of a MUSIM gap length preferred by the UE 100, information (for example, musim-GapOffset) indicating a gap offset of a MUSIM gap preferred by the UE 100, information (for example, musim-PrefStarting-SFN-AndSubframex) indicating a gap initiation location of an periodic MUSIM gap preferred by the UE 100 while the RRC connected state is maintained, and information (for example, musim-GapRepetitionAndOffsetPeriod) indicating a gap reception duration and a gap offset of a periodic MUSIM gap preferred by the UE 100 while the RRC connected state is maintained.

Note that the communicator 120 may include a plurality of transceivers. In a case where the UE 100 is in a state of communicating with the first network 200A by using at least one transceiver among the plurality of transceivers and ending communication with the second network 200B by using a transceiver different from at least one transceiver among the plurality of transceivers, the communicator 120 may transmit the restriction removal information or the restriction change information to the first network 200A.

The controller 214 of the base station 210A may determine whether or not to release or change the temporary restriction of the communication capability of the UE 100 used for communication with the first network 200A based on the restriction removal information or the restriction change information. In a case where it is determined to release or change the temporary restriction of the communication capability of the UE 100, the controller 214 of the base station 210A may execute the processing of step S106. In a case where it is determined not to release or change the temporary restriction of the communication capability of the UE 100, the controller 214 of the base station 210A may end the processing.

### Step S306:

The radio communicator 212 of the base station 210A transmits, to the UE 100, a message (for example, RRC reconfiguration message) including configuration information for releasing or changing the temporary restriction of the communication capability of the UE 100 in the P cell 210P. The communicator 120 of the UE 100 receives the message including the configuration information from the P cell 210P (the first network 200A). The message may be a response to the restriction removal information or the restriction change information.

The configuration information may include information indicating a configuration of at least one of the secondary cell (or the secondary cell group), the frequency band, and the MIMO layer. The configuration information may include information for configuring the MUSIM gap. The information may indicate a configuration of the MUSIM gap preferred by the UE 100, or may indicate a configuration of a different MUSIM gap.

### Step S307:

The network communicator 213 of the base station 210A that manages the P cell 210P may transmit a scheduling initiation instruction to another base station 210A that manages the S cell 210S. In a case where the P cell 210P and the S cell 210S are managed, the base station 210A may transmit the scheduling initiation instruction from the entity that manages the P cell 210P to the entity that manages the S cell 210S inside the controller 214.

The scheduling initiation instruction may be an instruction about initiating scheduling allocated to the UE 100 or an instruction about initiating a part of scheduling allocated to the UE 100. The scheduling initiation instruction may include at least a part of the information of the restrict change information.

The controller 214 of the base station 210A that manages the S cell 210S may release the temporary restriction of the communication capability of the UE 100 based on the scheduling initiation instruction. The network communicator 213 of the base station 210A may transmit a response message indicating that the scheduling initiation is executed to the base station 210A that manages the P cell 210P. The controller 214 of the base station 210A that manages the P cell 210P may execute processing of step S308 based on the reception of the response message.

### Step S308:

The UE 100 starts communication with the S cell 210S (or SCG) while communication with the P cell 210P (or MCG) is maintained.

The controller 130 (for example, the RRC processor 131) executes the release or change of the restriction of the communication capability based on the configuration information. The controller 130 may configure the secondary cell or the secondary cell group based on the configuration information. The controller 130 may configure the frequency band based on the configuration information. The controller 130 may configure the number of MIMO layers based on the configuration information.

The controller 130 may perform communication with the first network 200A via the second transceiver 122 in addition to communication with the first network 200A via the first transceiver 121 based on the RRC configuration based on the configuration information received from the first network 200A. For example, the controller 130 may perform communication with the P cell 210P (or the MSG) via the first transceiver 121 and may perform communication with the S cell 210S (or the SCG) via the second transceiver 122.

The configuration information may include information for configuring the MUSIM gap. As an example of the MUSIM operation, the controller 130 may monitor paging or attempt to receive a system information block in the second network 200B in the configured MUSIM gap.

As described above, the controller 130 of the UE 100 temporarily restricts the communication capability of the UE 100 used for communication with the first network 200A in order to perform communication with the second network 200B. The communicator 120 transmits, to the first network 200A, the restriction removal information for releasing the temporary restriction of the communication capability for communication with the second network 200B or the restriction change information for changing the temporary restriction. In addition, the radio communicator 212 of the base station 210 receives the restriction removal information or the restriction change information from the UE 100. As a result, the first network 200A can recognize the temporary restriction of the communication capability of the UE 100 based on restriction removal information or restriction change information. Accordingly, the UE 100 and the first network 200A can be easily properly synchronized with each other regarding the temporary restriction of the communication capability.

In addition, the controller 130 of the UE 100 may include the restriction removal information or the restriction change information in the MUSIM assistance information element. The communicator 120 may transmit, to the first network 200A, the MUSIM assistance information element including the restriction removal information or the restriction change information. The first network 200A can grasp that the UE 100 is transmitting the restriction removal information or the restriction change information in order to release or change the communication capability temporarily restricted for communication with the second network 200B.

In addition, the controller 130 may set an empty value to at least one of the information for restricting the secondary cell, the information for restricting the frequency band, and the information for restricting the multiple-input and multiple-output (MIMO) layer. The communicator 120 may transmit, to the first network 200A, the MUSIM assistance information element including the restriction removal information or the restriction change information in which the empty value is configured. As a result, the UE 100 can notify the first network 200A that the restriction of any one of the secondary cell, the frequency band, and the MIMO layer is (preferred to be) released or changed.

In addition, the controller 130 may include, as the restriction removal information or the restriction change information, the information indicating the number of transceivers usable for communication with the first network 200A in the MUSIM assistance information element. As a result, the UE 100 can notify the first network 200A of (the (preference of) the release or change of the restriction of the transceiver usable for communication with the first network 200A.

In addition, the controller 130 may include, as the restriction removal information, the flag information for activating the secondary cell in the MUSIM assistance information element. As a result, the UE 100 can notify the first network 200A that the restriction of the communication capability is (preferred to be) released by activating the secondary cell. In addition, since the flag information has a small amount of information (for example, 1 bit), radio resources can be saved.

In addition, the controller 130 may include, as the restriction removal information or the restriction change information, information indicating the release or change of the temporary restriction of the communication capability in the MUSIM assistance information element. As a result, the UE 100 can notify the first network 200A that the restriction of the communication capability temporarily restricted to perform communication with the second network 200B is (preferred to be) released or changed.

In addition, the controller 130 may include the gap preference information, together with the restriction removal information or the restriction change information, in the MUSIM assistance information element. As a result, the UE 100 can notify the first network 200A of the gap preferred to be configured by the UE 100 after the temporary restriction of the communication capability is released or changed.

In addition, the controller 130 may include the gap preference information, together with the restriction removal information or the restriction change information, in the MUSIM assistance information element based on the end of communication with the second network 200B. As a result, the UE 100 can notify the first network 200A of the gap preferred to be configured by the UE 100 after the temporary restriction of the capability is released or changed after communication with the second network 200B is ended.

In addition, the communicator 120 may transmit the overheating assistance information element to the first network 200A based on the detection of the internal overheating. The communicator 120 may transmit, as the restriction removal information or the restriction change information, the overheating assistance information element to the first network 200A in order to perform communication with the second network 200B regardless of whether or not the internal overheating is detected. As a result, since it is not necessary to newly specify the information element including the information for the temporary capability restriction of the UE 100, the influence on the specification can be reduced.

In addition, the communicator 120 may transmit, as the restriction removal information, the information for activating the secondary cell to the first network 200A. As a result, the UE 100 can notify the first network 200A that the secondary cell is (preferred to be) activated.

In addition, the communicator 120 may receive the configuration information for releasing or changing the restriction of the communication capability from the first network 200A. The controller 130 may execute the release or change of the restriction of the communication capability based on the configuration information. Since the UE 100 can restrict the communication capability based on the configuration information, the UE 100 and the first network 200A can easily properly synchronized with each other regarding the temporary restriction of the communication capability.

In addition, the communicator 120 may include a plurality of transceivers. In a case where the UE 100 is in a state of communicating with the first network 200A by using at least one transceiver among the plurality of transceivers and ending communication with the second network 200B by using a transceiver different from at least one transceiver among the plurality of transceivers, the communicator 120 may transmit the restriction removal information or the restriction change information to the first network 200A. As a result, the UE 100 can use the transceiver used for communication with the second network 200B for communication with the first network 200A.

### [Other Embodiments]

In the above-described embodiment, a case where the UE 100 includes two transceivers has been described, but the present disclosure is not restricted thereto. The UE 100 may have a plurality of transceivers. For example, the UE 100 may include three or more transceivers.

In the above-described embodiment, the UE 100 initiates a procedure for transmitting the information for the temporary capability restriction of the UE 100 due to the paging from the first network 200A, but the present disclosure is not restricted thereto. The UE 100 may initiate the procedure, for example, due to the input from the user.

The operation sequence (and the operation flow) in the above-described embodiment may not necessarily be executed in time series according to the order described in the flow diagram or the sequence diagram. For example, the steps in the operation may be executed in an order different from the order described in the flowchart or the sequence diagram, or may be performed in parallel. In addition, some of the steps in the operation may be removed or additional steps may be added to the processing. In addition, the operation sequence (and the operation flow) in the above-described embodiment may be performed separately and independently, or may be performed by combining two or more operation sequences (and operation flows). For example, some steps of one operation flow may be added to other operation flows, or some steps of one operation flow may be replaced with some steps of other operation flows.

In the above-described embodiments, the mobile communication system based on the NR is described as the example of the mobile communication system 1. However, the mobile communication system 1 is not restricted to this example. The mobile communication system 1 may be a system conforming to a TS of long term evolution (LTE) or another generation system (for example, a sixth generation) of the 3GPP standard. The base station 210 may be an eNB configured to provide protocol terminations of E-UTRA user plane and control plane toward the UE 100 in LTE. The mobile communication system 1 may be a system conforming to a TS defined in a standard other than the 3GPP standard. The base station 210 may be an integrated access and backhaul (IAB) donor or an IAB node.

A program may be provided for causing a computer to execute each processing to be performed by the UE 100 or the base station 210. The program may be recorded on a computer readable medium. By using the computer readable medium, the program can be installed in the computer. Here, the computer readable medium in which the program is recorded may be a non-transitory recording medium. The non-transitory recording medium is not particularly restricted to, but may be, for example, a recording medium such as a compact disk read only memory (CD-ROM) or a digital versatile disc read only memory (DVD-ROM). In addition, a circuit that executes each processing to be performed by the UE 100 or the base station 210 may be integrated, and at least a part of the UE 100 or the base station 210 may be configured as a semiconductor integrated circuit (chipset, SoC (system-on-chip)).

In the above-described embodiment, the term "transmit" may mean performing processing of at least one layer in a protocol stack used for transmission, or may mean physically transmitting a signal in a wireless or wired manner. Alternatively, the term "transmit" may mean a combination of performing processing of at least one layer in a protocol stack used for transmission and physically transmitting a signal in a wireless or wired manner. Similarly, the term "receive" may mean performing processing of at least one layer in a protocol stack used for reception, or may mean physically receiving a signal in a wireless or wired manner. Alternatively, the term "receive" may mean a combination of performing processing of at least one layer in a protocol stack used for reception and physically receiving a signal in a wireless or wired manner. Similarly, the term "obtain/acquire" may mean obtaining/acquiring information from stored information, may mean obtaining/acquiring information from information received from another node, or may mean obtaining/acquiring information by generating the information. Similarly, the term "based on" and "depending on/in response to" do not mean "only based on" or " only on depending/only in response to" unless explicitly stated otherwise. The term "based on" means both "only based on" and "at least partially based on". Similarly, the term "depending on/in response to" means both "only depending on/in response to" and "at least partially depending on/in response to". Similarly, the terms "include" and "comprise" do not mean including only enumerated items, but mean both including only enumerated items and including additional items in addition to the enumerated items. Similarly, in the present disclosure, the "or" does not mean exclusive OR but means OR. Moreover, any reference to elements using designations such as "first", "second", and the like used in the present disclosure does not generally restrict the amount or order of those elements. These designations may be used in the present disclosure as a convenient method to distinguish between two or more elements. References to first and second elements do not mean that only two elements can be employed therein or that the first element should precede the second element in any form. In the present disclosure, when articles such as a, an, and the in English are added by translation, these articles cover the plural meaning unless the context clearly indicates otherwise.

Although the present disclosure has been described in accordance with examples, it is understood that the present disclosure is not restricted to the examples or structures. The present disclosure also covers various modified examples or modifications made within an equivalent range. In addition, various combinations or modes, or other combinations or modes including only one element, more elements, or less elements also fall within the scope and spirit of the present disclosure.

### (Supplementary Notes)

Features related to the above-described embodiments are additionally described.

### [Supplementary Note 1]

A communication apparatus (100) capable of communicating with a plurality of networks (200A and 200B) by using a plurality of subscriber identity modules, the communication apparatus comprising:
a communicator (120) configured to transmit, to a first network (200A), information for the temporary capability restriction of the for the temporary capability restriction of the communication apparatus for temporarily restricting a communication capability of the communication apparatus used for communication with the first network; and
a controller (130) configured to determine whether or not to execute the restriction of the communication capability after the information for the temporary capability restriction of the for the temporary capability restriction of the communication apparatus is transmitted,
wherein the controller is configured to perform control to start connection with a second network (200B) by executing the restriction of the communication capability in a case where it is determined to execute the restriction of the communication capability.

### [Supplementary Note 2]

The communication apparatus according to supplementary note 1, wherein
the communicator is configured to receive configuration information for restricting the communication capability from the first network, and
the controller is configured to determine to execute the restriction of the communication capability based on the configuration information.

### [Supplementary Note 3]

The communication apparatus according to supplementary note 2, wherein
the controller is configured to determine to execute the restriction of the communication capability based on expiration of a timer started after the information for the temporary capability restriction of the for the temporary capability restriction of the communication apparatus is transmitted even in a case where the configuration information is not received.

### [Supplementary Note 4]

The communication apparatus according to supplementary note 3, wherein
the communicator is configured to receive reception confirmation information for the information for the temporary capability restriction of the for the temporary capability restriction of the communication apparatus from the first network, and
the controller is configured to start the timer in response to the reception of the reception confirmation information.

### [Supplementary Note 5]

The communication apparatus according to supplementary note 3 or 4, wherein
the communicator is configured to receive a timer value to be set in the timer from the first network.

### [Supplementary Note 6]

The communication apparatus according to any one of supplementary notes 3 to 5, wherein
the controller is configured to control a designated timer started in response to transmission of a UE assistance information message including information indicating a preferred RRC state,
the communicator is configured to receive a designated timer value to be set in the designated timer from the first network, and
the controller is configured to use the designated timer value as the timer value to be set in the timer.

### [Supplementary Note 7]

The communication apparatus according to supplementary note 2, wherein
the controller is configured to determine not to execute the restriction of the communication capability until the configuration information is received.

### [Supplementary Note 8]

The communication apparatus according to supplementary note 1, wherein
the controller is configured to determine to execute the restriction of the communication capability regardless of whether or not configuration information for restricting the communication capability is received from the first network.

### [Supplementary Note 9]

The communication apparatus according to supplementary note 8, wherein
the controller is configured to determine to execute the restriction of the communication capability based on reception of reception confirmation information for the information for the temporary capability restriction of the for the temporary capability restriction of the communication apparatus from the first network.

### [Supplementary Note 10]

The communication apparatus according to any one of supplementary notes 1 to 9, wherein,
in a case where it is determined to execute the restriction of the communication capability, the controller is configured to execute the restriction of the communication capability by releasing a part of radio resource control (RRC) configurations.

### [Supplementary Note 11]

The communication apparatus according to any one of supplementary notes 1 to 10, wherein
the communicator includes a plurality of transceivers, and
the communicator is configured to transmit the information for the temporary capability restriction of the for the temporary capability restriction of the communication apparatus to the first network in a case where the communication apparatus is in a state of performing simultaneous parallel communication with the first network by using the plurality of transceivers.

### [Supplementary Note 12]

A communication method executed in a communication apparatus capable of communicating with a plurality of networks by using a plurality of subscriber identity modules, the communication method comprising the steps of:
transmitting, to a first network, information for the temporary capability restriction of the for the temporary capability restriction of the communication apparatus for temporarily restricting a communication capability of the communication apparatus used for communication with the first network;
determining whether or not to execute the restriction of the communication capability after the information for the temporary capability restriction of the for the temporary capability restriction of the communication apparatus is transmitted; and
performing control to start connection with a second network by executing the restriction of the communication capability in a case where it is determined to execute the restriction of the communication capability.

## Claims

1. A communication apparatus (100) capable of communicating with a plurality of networks (200A and 200B) by using a plurality of subscriber identity modules, the communication apparatus comprising:
a communicator (120) configured to transmit, to a first network (200A), information for the temporary capability restriction of the for the temporary capability restriction of the communication apparatus for temporarily restricting a communication capability of the communication apparatus used for communication with the first network; and
a controller (130) configured to determine whether or not to execute the restriction of the communication capability after the information for the temporary capability restriction of the for the temporary capability restriction of the communication apparatus is transmitted,
wherein the controller is configured to perform control to start connection with a second network (200B) by executing the restriction of the communication capability in a case where it is determined to execute the restriction of the communication capability.

2. The communication apparatus according to claim 1, wherein
the communicator is configured to receive configuration information for restricting the communication capability from the first network, and
the controller is configured to determine to execute the restriction of the communication capability based on the configuration information.

3. The communication apparatus according to claim 2, wherein
the controller is configured to determine to execute the restriction of the communication capability based on expiration of a timer started after the information for the temporary capability restriction of the for the temporary capability restriction of the communication apparatus is transmitted even in a case where the configuration information is not received.

4. The communication apparatus according to claim 3, wherein
the communicator is configured to receive reception confirmation information for the information for the temporary capability restriction of the for the temporary capability restriction of the communication apparatus from the first network, and
the controller is configured to start the timer in response to the reception of the reception confirmation information.

5. The communication apparatus according to claim 3 or 4, wherein
the communicator is configured to receive a timer value to be set in the timer from the first network.

6. The communication apparatus according to claim 3 or 4, wherein
the controller is configured to control a designated timer started in response to transmission of a UE assistance information message including information indicating a preferred RRC state,
the communicator is configured to receive a designated timer value to be set in the designated timer from the first network, and
the controller is configured to use the designated timer value as the timer value to be set in the timer.

7. The communication apparatus according to claim 2, wherein
the controller is configured to determine not to execute the restriction of the communication capability until the configuration information is received.

8. The communication apparatus according to claim 1, wherein
the controller is configured to determine to execute the restriction of the communication capability regardless of whether or not configuration information for restricting the communication capability is received from the first network.

9. The communication apparatus according to claim 8, wherein
the controller is configured to determine to execute the restriction of the communication capability based on reception of reception confirmation information for the information for the temporary capability restriction of the for the temporary capability restriction of the communication apparatus from the first network.

10. The communication apparatus according to any one of claims 1 to 4, wherein
in a case where it is determined to execute the restriction of the communication capability, the controller is configured to execute the restriction of the communication capability by releasing a part of radio resource control (RRC) configurations.

11. The communication apparatus according to any one of claims 1 to 4, wherein
the communicator includes a plurality of transceivers, and
the communicator is configured to transmit the information for the temporary capability restriction of the for the temporary capability restriction of the communication apparatus to the first network in a case where the communication apparatus is in a state of performing simultaneous parallel communication with the first network by using the plurality of transceivers.

12. A communication method executed in a communication apparatus capable of communicating with a plurality of networks by using a plurality of subscriber identity modules, the communication method comprising the steps of:
transmitting, to a first network, information for the temporary capability restriction of the for the temporary capability restriction of the communication apparatus for temporarily restricting a communication capability of the communication apparatus used for communication with the first network;
determining whether or not to execute the restriction of the communication capability after the information for the temporary capability restriction of the for the temporary capability restriction of the communication apparatus is transmitted; and
performing control to start connection with a second network by executing the restriction of the communication capability in a case where it is determined to execute the restriction of the communication capability.
